# EUROPEAN PATENT SPECIFICATION

(11) **EP 4 195 339 B1**
(45) Date of publication and mention of the grant of the patent: **31.07.2024**
(21) Application number: 23152774.8
(22) Date of filing: 22.10.2020
(51) Int. Cl.: H01M 8/2432, C25B 1/042, C25B 9/77, H01M 8/12, H01M 8/0232

(54) **METAL-SUPPORTED CELL UNIT WITH FLANGED PERIMETER FEATURES**
METALLGESTÜTZTE ZELLENEINHEIT MIT GEFLANSCHTEN UMFANGSMERKMALEN
UNITÉ CELLULAIRE SUPPORTÉE PAR UN MÉTAL AVEC DES ÉLÉMENTS PÉRIPHÉRIQUES À BRIDE

(30) Priority: 24.10.2019 GB 201915438
(43) Date of publication of application: 14.06.2023
(62) Divisional of application: 20796790.2
(73) Proprietor: Ceres Intellectual Property Company Limited, West Sussex RH13 5PX (GB)
(72) Inventor: SELBY, Mark, Horsham, RH13 5PX (GB); FREEMAN, Euan Norman Harvey, Horsham, RH13 5PX (GB); DOMANSKI, Tomasz, Horsham, RH13 5PX (GB); NOBBS, Chris, Horsham, RH13 5PX (GB)
(74) Representative: Dunlop, Hugh Christopher

(56) References cited:
- WO-A2-2005/064731
- GB-A- 2 420 440
- US-A1- 2004 072 057
- US-A1- 2004 126 636
- US-A1- 2013 115 483

## Description

### Field of the Invention

The present invention relates to an improved cell unit and to a cell stack comprising a plurality of such cell units, as well as a method of manufacturing the same. The present invention more specifically relates to metal-supported cell units and stacks thereof, and more specifically still metal-supported solid oxide fuel cell (MS-SOFC) units and stacks thereof and metal-supported solid oxide electrolyser cell (MS-SOEC) units and stacks thereof.

### Background of the Invention

### Solid Oxide Fuel Cells

Fuel cell units use an electrochemical conversion process that oxidises fuel to produce electricity. They may be tubular or planar in configuration. A solid oxide fuel cell (SOFC) is based upon a solid oxide electrolyte that conducts negative oxygen ions from a cathode to an anode located on opposite sides of the electrolyte. For this, a fuel, or reformed fuel, contacts the anode (fuel electrode) and an oxidant, such as air or an oxygen rich fluid, contacts the cathode (air electrode).

Significant challenges in mechanical, electrical and thermal design are encountered when designing SOFC stacks. For example, in a planar SOFC stack arrangement, a stack of cells is typically arranged in a stacking direction from one end of the stack (e.g. from a base plate end) to the other end (e.g. to an end plate end). The operating performance of the fuel cells / fuel cell stack repeat layers are affected by temperature and other factors.

### Metal Supported Solid Oxide Fuel Cells

Conventional ceramic-supported (e.g. anode-supported) SOFCs suffer from low mechanical strength and are vulnerable to fracture. Metal-supported SOFCs (MS-SOFCs) have recently been developed which have the active fuel cell component layer supported on a metal substrate. In these cells, the ceramic layers can be very thin since they only perform an electrochemical function (i.e. they are not self-supporting). Such metal supported SOFC stacks are more robust, have a lower cost, and also exhibit better thermal properties. They can also be manufactured using conventional metal welding techniques.

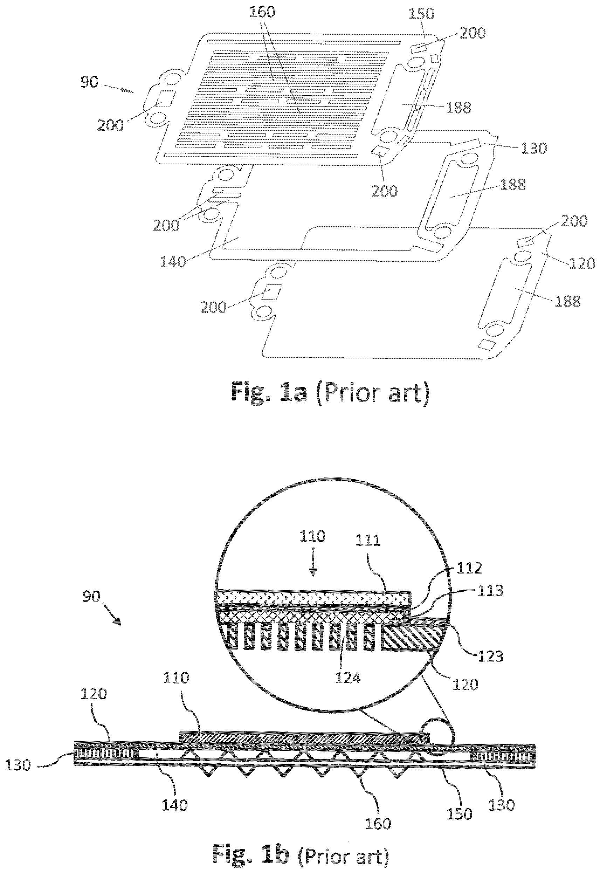

WO2015/136295 describes metal-supported SOFCs in which the electrochemically active layer (or active fuel cell component layer) comprises anode, electrolyte and cathode layers respectively deposited on, and supported by, a metal support plate 120 (e.g. foil). As shown in Figs. 1a to 1c, the fuel cell repeat unit 90 comprises three plates or planar components - the metal support plate 120, a separator plate (or interconnect) 150 and a spacer plate 130 sandwiched between them. It also has fluid ports 188, 200 for oxidant or fuel. The three plates are stacked upon one another and welded (fused together) through the spacer plate 130 to form a single metal-supported solid oxide fuel cell unit 90 with a fluid volume 140 in the middle defined by the space provided in the spacer plate 130. The metal components of the fuel cell stack repeat layer 90 are in electrical contact with one another, with electron flow between them being primarily via the fuse/weld path, thereby avoiding surface-to-surface contact resistance losses.

In a MS-SOFC, the metal substrate may be an intrinsically porous metal substrate formed from a powder metal precursor (for example, by tape casting), or, more preferably, is formed from a metal support plate provided with a porous region in the form of through holes or small apertures surrounded by a non-porous (solid) region. The porous region 124 is provided through the metal support plate 120, and an anode layer 113 (or cathode 111, depending on the polarity orientation of the electrochemically active layer 110) is coated over that region, and then successive layers coated on top, which layers are thus supported by the metal support plate 120. As shown, the electrolyte layer usually is coated over the side edges of the innermost electrode and extends over the metal substrate thereby sealing the gas within the porous region and innermost electrode. The porous region allows the fluid volume 140 (defined by the adjacent plates 120, 150 and spacer plate 130) to be in fluid communication with the electrochemically active layers 110 on the support plate 120 through the small apertures. As shown, the electrolyte layer usually is coated over the side edges of the innermost electrode and extends over the metal substrate (as extended layer 123) thereby sealing the gas within the porous region and innermost electrode.

In the separator plate 150, up and down corrugations are provided to extend up to the cathode 111 (or anode 113, depending on the polarity orientation of the electrochemically active layers 110) of a subsequent fuel cell unit 90 stacked onto this fuel cell unit, and down to the metal support plate 120 of its own fuel cell unit. This electrically connects between adjacent fuel cells units 90 of a stack to put the electrochemically active layers 110 of the stack (usually one on each fuel cell unit) in series with one another. Other pressed three dimensional features such as round or elongate dimples (or troughs and peaks) extending from each side would also be suitable to provide electrical contact and structural support (resisting stack compression forces).

Other teachings of fuel cells, fuel cell stacks, fuel cell stack assemblies, and heat exchanger systems, arrangements and methods can be found in WO2002/35628, WO2003/07582, WO2004/089848, WO2005/078843, WO2006/079800, WO2006/106334, WO2007/085863, WO2007/110587, WO2008/001119, WO2008/003976, WO2008/015461, WO2008/053213, WO2008/104760, WO2008/132493, WO2009/090419, WO2010/020797, WO2010/061190, and WO2015/004419.

US2013115483A1 relates generally to a system including a fuel cell having a fuel electrode and an oxygen electrode. A shield is configured to be on the oxygen electrode side of the fuel cell and an air chamber is configured to be on the oxygen electrode side of the fuel cell. The air chamber is formed at least in part by the shield. A fuel chamber is configured to be on the fuel electrode side of the fuel cell where the fuel chamber is configured to hold solid fuel. US2004072057A1 relates generally to a fuel cell including a substrate, where the substrates includes a reactant-permeable region and a non-permeable support region and a fuel cell carried by the substrate. GB2420440A relates generally to the distribution of fuel and/or oxygen containing gas to an electrode of a fuel cell.

A solid oxide electrolyser cell (SOEC) may have the same structure as an SOFC but is essentially a solid oxide fuel cell operating in a regenerative mode to achieve the electrolysis of water and/or carbon dioxide by using the solid oxide electrolyte to produce hydrogen gas and/or carbon monoxide and oxygen. In a SOFC fuel (for example, hydrogen gas) is provided by a fuel port and is used by the cell, whereas in a SOEC the cell produces, for example, hydrogen gas which is collected at the fuel port.

The present invention is directed at stack repeat solid oxide cell units having a structure suitable for use as an SOEC or SOFC. For convenience, SOEC or SOFC cell units will both hereinafter be referred to as "cell units" (i.e. meaning SOEC or SOFC cell units).

There is a continual drive to increase the cost-efficiency of fuel cells - reducing their cost of manufacture would be of significant benefit to reduce the entry cost of fuel cell energy production.

### Summary of the Invention

Aspects of the invention are set out in the claims. According to an aspect there is described a metal-supported, planar cell arrangement, the metal-supported, planar cell arrangement comprises: at least one pair of cells, each cell comprising a metal substrate having first and second sides and a porous region providing fluid communication between the sides, planar cell chemistry layers comprising fuel electrode, electrolyte, and air electrode layers being coated or deposited over, and supported by, the porous region on the first side; wherein: the metal substrates are in a stacked arrangement with their cell chemistry layers overlying each other such that either both their first sides, or, both their second sides face inwardly in a spaced, opposed relationship, the inwardly facing sides thereby defining a common first fluid volume between them for one of fuel or oxidant, and at least one of the metal substrates comprises flanged perimeter features, and the metal substrates are sealed together around the flanged perimeter features to form the common first fluid volume therebetween.

The invention relates to a metal-supported, planar cell arrangement, that is to say, a cell arrangement in which the cell chemistry layers are planar (extending only in a single plane) and non self-supporting i.e. they only exist as thin coatings or films respectively deposited over and (integrally) supported by the porous metal substrate. This is in contrast to anode-supported, or cathode-supported, or electrolyte-supported cells where the cell chemistry layers form rigid, self-supporting tiles that can exist alone and be mounted or attached to other support structures. The invention particularly relates to metal supported, solid oxide fuel cells "MS-SOFCs" or solid oxide electrolysis cells "MS-SOECs".

The porous metal substrate only supports cell chemistry layers on its first side; the second side of each substrate does not support any cell chemistry layers, rather the second sides face each other and are exposed to the common volume or space between them that enables a first fluid to be supplied to the innermost electrode (closest to the supporting metal substrate) on each first side.

The (active) cell chemistry layers are planar and hence, at least the portion of the metal substrate supporting that chemistry is planar as well. The cell chemistry layers are laid up in the same order over each region such that the metal substrates define a common first fluid volume that may act as a fuel volume where each cell has a fuel electrode closest to the supporting metal substrate, or that may act as an oxidant volume where each cell has an air electrode closest to the supporting metal substrate. Within the stacked arrangement the cell chemistry layers lie above and below each other (e.g. in parallel planes), and will usually be laterally aligned with each other (i.e. in register with each other).

The two fuel electrodes may be electrically connected and the two air electrodes of the pair of cells may be electrically connected. Usually, the innermost electrodes (closest to the supporting metal substrate) are electrically connected by virtue of an electrical connection between the two respective opposed metal substrates. The two outermost electrodes are connected by connection between the 2 respective current collectors on the outermost electrodes.

The metal substrates may be sealingly connected together around a periphery thereof.

Preferably, the pair of metal substrates comprise two separate metal plates that are connected together either directly or indirectly to form the stacked arrangement, for example, such that each metal plate itself has an integral porous region (bounded by a non-porous region) and supports cell chemistry layers coated on the porous region. Usually, the two separate metal plates are identical.

In one embodiment, the two metal plates are connected together indirectly to form the stacked arrangement, optionally with a (flat) metal spacer plate disposed between them. The two metal plates and intermediate metal spacer plate may be sealingly connected together, at least around a periphery thereof, for example, by welding through all three components.

When a spacer is disposed between the two separate metal plates, this has the disadvantage of an extra component being required in the stack, but has the advantage that flat planar metal plates may be used upon which the cell chemistry layers may conveniently be directly laid down by conventional coating or spraying deposition techniques. The spacer may comprise a frame or flat peripheral component (positioned beyond the active cell chemistry region) that is sandwiched between flat metal substrates and that creates a volume for, and sealingly surrounds, the first fluid volume.

Usually, there should not be any significant structure within the fluid volume that would obstruct flow but a further spacer component in the form of an open or very permeable structure could be provided where the cell chemistry is provided that may support and/or contact the substrate (or chemistry).

The two metal plates are connected together directly so that they abut one another to form the stacked arrangement, one or both of the metal plates having inherent shaped features (for example, flanged perimeter features) that create the first fluid volume between the plates. The two metal plates may be sealingly connected directly together, at least around a periphery thereof, for example, by welding. This reduces the number of components, as a spacer is not required, thereby reducing material wastage. It may also conveniently electrically connect the two metal plates.

Alternatively (to separate substrates), the metal substrates are formed as a single continuous metal substrate having a first side upon which the pair of cell chemistry layers are respectively coated or deposited over the porous regions, the continuous metal substrate being folded (e.g. through 180 degrees) between the cell chemistry layers so that they overlie each other to form a folded pair of cells defining the first fluid volume for the one of fuel or oxidant. Conveniently, the innermost electrodes (i.e. closest to the supporting metal substrate) are electrically connected by virtue of the continuous metal substrate. Such a design also inherently requires less components and less welds/sealing.

The continuous metal substrate may be folded through 180 degrees, the 180 degree fold may take the form of two 90 degree folds separated by a short section of continuous metal substrate which, in turn, assists in defining the common fluid volume enclosed by the continuous metal substrate. As described elsewhere, shaped features or a spacer may be provided to support the substrates and maintain an open common fluid volume.

Preferably, the arrangement further comprises multiple folded pairs of cells stacked adjacent one another in a bank of cells. In the bank, the innermost electrodes (closest to the supporting metal substrate) may be electrically connected by virtue of the continuous metal substrate, and the outermost electrodes may be electrically connected by means of current collecting structures. The current collecting structures may be permeable support structures, and need only be exposed to one fluid environment, which is the same fluid environment over its surface area. This reduces the thermal and chemical requirements of the current collecting structures.

Preferably, in the bank, each folded pair of cells is formed from a separate respective metal substrate, which substrate is folded once so that it has only one folded end, the first fluid volume being disposed inside the folded substrate.

Alternatively (to separate substrates), in the bank adjacent folded pairs of cells are formed from a common continuous metal substrate, which substrate is folded multiple times so that it has multiple opposite folded ends. Such a substrate may define multiple respective first fluid volumes for the one of fuel or oxidant. Such volumes may alternate with respective second fluid volumes for the other of fuel or oxidant.

The flanged perimeter features may be formed by pressing the substrates into a concave configuration. Both of the metal substrates of the pair of cells may comprise flanged perimeter features.

Preferably, wherein the metal substrates are sealed together by directly adjoining the metal substrates at the flanged perimeter features by welding around the flanged perimeter features.

Preferably, at least one fluid port, usually at least one inlet port and at least one outlet port, is provided as an opening through each of the metal substrates, the respective fluid ports being aligned with each other in the direction of stacking and in communication with the common first fluid volume. Alternatively, the at least one fluid port is in communication with the common second fluid volume. Alternatively, at least a first fluid port is in communication with the common first fluid volume and at least a second fluid port is in communication with the common second fluid volume. The at least first fluid port and the at least second fluid port may deliver a first fluid to the first fluid volume and a second fluid to the second fluid volume, respectively. At least a first exhaust port may be in communication with the common first fluid volume, and at least a second exhaust port may be in communication with the common second fluid volume. The at least first exhaust port and the at least second exhaust port may extract a first exhaust fluid from the first fluid volume and a second exhaust fluid from the second fluid volume.

Preferably, at least one of the metal substrates is provided with shaped port features formed around its port that extend inwardly within the common first fluid volume, elements of the shaped port features being laterally spaced from one another to define fluid pathways between the elements from the port to enable passage of fluid from the port to the common first fluid volume. The shaped port features are also preferably formed by pressing.

At least one of the metal substrates may be provided with shaped port features formed around its port that extend outwardly away from the common first fluid volume. Where multiple such pairs of cells are stacked adjacent one another, such features may serve laterally to locate a sealing gasket provided between the pairs of cells, or such features may interface with an adjacent plate to form a hard stop to limit compression of a gasket provided between the pairs of cells, or may form a surface upon which a seal may be formed in situ from a sealing paste or the like. Within a bank of cells, metal substrates may be electrically connected together and so such shaped port features may be welded to those of adjacent cells conveniently providing both an electrical connection and enabling sealing of the ports/manifolds.

A support structure may be provided within the common first fluid volume in order to help maintain a spacing between the opposed respective inwardly facing sides where the compressive force for current collection are low or the cells are sufficiently stiff.

The support structure may be a permeable support structure, and need only be exposed to one fluid environment, which is the same fluid environment over its surface area. This reduces the thermal and chemical requirements of the support structures. The innermost electrodes (closest to the supporting metal substrate) may be electrically connected by virtue of the metal substrate, and the outermost electrodes may be electrically connected by means of current collecting structures. The current collecting structures may be permeable support structures, and need only be exposed to one fluid environment, which is the same fluid environment over its surface area. This reduces the thermal and chemical requirements of the current collecting structures.

The support structure within the common first fluid volume may be provided with a catalyst in order to promote internal reforming, for example when the common first fluid volume is a fuel volume. If a support structure is not provided within the common first fluid volume, such a catalyst may be provided on the metal substrate surface, for example when the common first fluid volume is a fuel volume.

Preferably, the inwardly facing sides define a first fluid volume for fuel. The inwardly facing sides are usually the second sides of the metal substrates. In that arrangement, the cell chemistry faces outwardly and current may be conveniently collected from the outermost electrodes.

Usually, the fuel electrode layer will be the first layer of the cell chemistry layers deposited on the first side of the metal substrate. Where the inwardly facing sides define a first fluid volume for fuel (when operated as a SOFC), the inwardly facing side will thus be the second side of the metal substrate, and the fuel gas will pass through the porous region from the second side to the first side so as to contact the fuel electrode layer.

In an alternative cell arrangement, the inwardly facing sides define a first fluid volume for oxidant. In this case, if again the fuel electrode layer is the first layer of the cell chemistry layers deposited on the first side of the metal substrate, the inwardly facing side will thus be the first side, such that the cell chemistry layers are within the common first fluid volume, and the air electrode layer will be exposed to the first fluid volume for oxidant. In that arrangement, the outermost electrodes are located within the substrates necessitating careful insulation of any device collecting current from the substrates themselves (at the opposite potential).

Preferably, multiple pairs of cells are stacked adjacent each other to form a bank of cells, whereby at least one second fluid volume is defined between adjacent pairs of cells, and the first fluid volume is for either fuel or oxidant and the at least one second fuel volume is for the other of fuel or oxidant. This means that alternating first and second fluid volumes are defined along the stacking direction. Hence, the other respective sides of the metal substrates, which face outwardly in a respective pair of cells of the bank are in a spaced, opposed relationship with counterparts in an adjacent respective pair of cells. Usually, the first fluid volume is defined between metal substrates in the pair of cells, and the second fluid volume is defined between the adjacent pairs.

In the bank, adjacent first fluid volumes may be in fluid communication with each other via openings provided through the respective metal substrates, which openings are aligned in the stack direction to form internal passageways (manifolds) within the bank. The same may apply to the second fluid volumes. However, one of the two fluid volumes may have externally manifolded inlet and/or outlet ports. The internal passageways may be sealingly defined by gaskets provided between the pairs of cells in the bank.

A support structure may be present within the common first fluid volume and may be provided with a catalyst in order to promote internal reforming, for example. If a support structure is not provided within the common first fluid volume, such a catalyst may be provided on the metal substrate surface, for example when the common second fluid volume is a fuel volume.

Preferably, all the fuel electrodes in the bank are electrically connected and/or all the air electrodes in the bank are electrically connected. This means that the electrodes of one type are connected in parallel. This leads to a relatively increased current output of the bank.

In a highly preferred arrangement, all the respective pairs of cells in a bank are welded together, the substrates thus all being electrically connected. The welding may be conducted during layup as each cell is added to the stack.

Preferably, the metal substrates and cell chemistry layers are laid out with side edges, and the connected fuel electrodes and/or air electrodes are connected along the same side edges.

Preferably, the fuel electrodes in one bank are connected in series to the air electrodes of a next adjacent bank. This leads to a relatively increased voltage output of the banks of fuel cells.

Preferably, an insulating sheet is disposed between adjacent banks to prevent direct electrical contact between the (e.g. outermost electrodes of the) adjacent banks. For example, with the banks connected in series there may be an electrical connection between the last substrate of one bank and the outermost electrode of the adjacent bank

In one embodiment, a single cell is provided at an end of a bank, and that cell makes direct electrical contact with an adjacent bank (for example, between the substrate of the single cell and the outermost electrode of the adjacent bank) so as to connect the adjacent banks in series.

Such a single or unpaired cell may comprise a metal substrate with active cell chemistry layers on it that is attached to a non-porous metal sheet to form an end coupon (for example, by welding to form the end coupon with an enclosed fluid volume). The metal sheet may be, for example, an undrilled metal substrate that may also be flat and unformed. Advantageously, in this way, adjacent banks may be connected in series, with face to face contact over a large portion of the cell area, without the need for additional electrical connections. For example, one bank may have its interconnectors all connected in parallel and the outermost interconnect may contact (physically and electrically) and make a series connection with a non-porous metal sheet of an end coupon of the adjacent bank. In that adjacent bank, the non-porous metal sheet and substrate are at the same potential and are connected in parallel to all the other metal substrates in that bank. Thus, parallel connected substrates in the adjacent bank are connected by a series connection to parallel connected interconnectors in the first bank.

According to a further aspect, there is described a method of assembly of a metal-supported, planar cell arrangement, the method comprises: providing first and second cells, each comprising a metal substrate having first and second sides and a porous region providing fluid communication between the sides, planar cell chemistry layers comprising fuel electrode, electrolyte, and air electrode layers being coated or deposited over, and supported by, the porous region on the first side; wherein at least one of the metal substrates comprises flanged perimeter features; and inverting one of the cells with respect to the other so that the metal substrates are in a stacked arrangement with their cell chemistry layers overlying each other such that either both their first sides, or, both their second sides face inwardly in a spaced, opposed relationship so as to define a common first fluid volume therebetween for one of fuel or oxidant, and sealing the metal substrates together around the flanged perimeter features to form the common first fluid volume therebetween, so as to form the cell arrangement.

The method may comprise electrically connecting either the two fuel electrodes or the two air electrodes of the pair of unit cells. In a continuous substrate such a substrate may provide the connection.

Thus, a repeating unit comprising a pair of cells can be manufactured which define a common first fluid volume therebetween.

Preferably, the metal substrates are formed as a single continuous metal substrate, and the inverting comprises folding the continuous metal substrate between the cell chemistry layers so that they overlie each other to form a folded pair of cells defining the first fluid volume for the one of fuel or oxidant. The folding may be through 180 degrees, and may comprise two 90 degree folds separated by spacing corresponding to the desired height of the first fluid volume.

Preferably, the cell chemistry layers of the pair of cells are respectively coated or deposited over the porous regions first side, and the metal substrate is subsequently folded. Coating or depositing followed by folding conveniently means that the substrate need not be turned over to coat or deposit the cell chemistry layers of the pair of cells, and means that the cell chemistry layers of the pair of cells can be coated or deposited in the same manufacturing process.

Preferably, a pre-fold is created on the metal substrate prior to coating or depositing the cell chemistry layers. The pre-fold is a precursor to the fold, positioned in the desired location of the fold or folds, and the cell chemistry layers of the pair of cells is subsequently coated or deposited to either side of the pre-fold. The pre-fold may be created by stamping or scoring a continuous or discontinuous line across the metal substrate. Two pre-fold lines are created if the fold comprises two 90 degree folds. Further pre-fold lines may be created as precursors to a substrate folded multiple times. The pre-fold creates a line of weakness along which the substrate is more susceptible to folding during the folding step, after coating or depositing of the cell chemistry layers, which reduces the possibility for damaging the cell chemistry layers in the process of folding the substrate. That is, the pre-fold creates a line of weakness.

A step of flattening may follow the step of creating a pre-fold. The flattening ensures that the substrate is sufficiently flat for coating or deposition of the cell chemistry layers.

Preferably, the method further comprises cutting openings through each of the metal substrates to form at least one inlet port and at least one outlet port.

Thus, ports for fluid delivery are formed in each metal substrate. Upon folding and/or stacking of the metal substrates, the respective fluid ports being aligned with each other in the direction of folding and/or stacking and in communication with the common first fluid volume. Further ports may similarly be in communication with the second fluid volume.

Preferably, at least one of the metal substrates is pressed around its port to form shaped port features that extend inwardly within the common first fluid volume or that extend outwardly away from the common first fluid volume.

In a subsequent step, the metal substrates may be sealed together around part or all of their periphery (e.g. around one, two, three or all four sides) by a flanged perimeter or separate spacer component. In the case of a folded continuous substrate, a folded side may or may not require a flanged perimeter. A subsequent step of welding or brazing around the flange may be used. This step of welding or brazing around the periphery seals the first fluid volume from the remaining environment which may or may not be in communication with the second fluid volume.

The step or steps of pressing provide a concavity for the first and/or second fluid volumes. The flange around the periphery and the shaped port features that extend inwardly within the common first fluid volume may be formed in the same or separate pressing steps. The steps of pressing and cutting may be made before or after the step of coating or depositing the cell chemistry layers; preferably the steps of pressing and cutting may be made before the step of coating or depositing the cell chemistry layers to prevent damage to the cell chemistry layers.

Preferably, a further cell arrangement is provided in the same manner as the first cell arrangement, the cell arrangements are stacked into a bank and electrical connections between fuel electrodes within a bank, and/or, air electrodes within a bank are provided. A further step may comprise stacking the respective banks of cells to form a stack of cells. An insulator may be provided between adjacent banks such that the respective end cells in adjacent banks are not connected in series. Alternatively, adjacent banks may be connected in series where a single cell is provided at an end of a bank.

Preferably, the metal substrates are generally rectangular, and the port holes are provided at left and right ends thereof with cell chemistry layers in a central region facing outwardly from each pair of metal substrates, and an electrical conducting and fluid conducting spacer is laid over the uppermost chemistry layer (outermost electrode), in contact with the chemistry layer and separated from the metal substrate, to provide electrical contact to a chemistry layer of another cell to be placed on top in a stacked arrangement, and the spacer is provided with electrical connections at the front and/or rear edges thereof, perpendicular to the disposition of the port holes. Preferably, the conducting spacer is separated from the underlying metal substrate by an extended area of electrolyte surrounding the central region and acting as an insulator.

### Brief Description of the Drawings

Fig. 1a shows an exploded view of a prior art solid oxide fuel cell unit;
Fig. 1b shows a sectional view of the prior art fuel cell unit, inverted vis-á-vis Fig. 1a;
Fig. 1c shows a sectional view of two of the prior art fuel cell units in a stack arrangement;
Fig. 2 shows a novel arrangement of a pair of cell units in a back-to-back arrangement with outwardly facing active cell chemistry layers;
Fig. 3 shows an alternative novel arrangement of a pair of cell units in a face-to-face arrangement with inwardly facing active cell chemistry layers;
Fig. 4a shows a bank of fuel cell units comprising two pairs of cell units, each pair in the back-to-back arrangement according to Fig. 2;
Fig. 4b shows an alternative bank of cell units with alternative spacing arrangements;
Fig. 5 shows a novel stack arrangement in which a pair of banks, each bank according to Fig. 4a, are stacked one atop of another with an insulating layer between adjacent banks.
Fig. 6 shows the stack arrangement of Fig. 5 including series electrical connections between the banks.
Fig. 7a shows an alternative stack arrangement in which there are three pairs of cell units in each bank, and two banks are stacked one on top of another with an insulating layer between adjacent banks, the banks being electrically connected in series.
Fig. 7b shows an alternative arrangement for electrical connections between the banks.
Fig. 7c shows a further alternative arrangement for electrical connections between the banks.
Fig. 8a shows a novel cell unit comprising a metal substrate and active cell chemistry layers; Fig 8b. shows two such cell units in a back-to-back arrangement with outwardly facing active cell chemistry layers; and Fig. 8c shows a bank of cell units comprising two pairs of cell units, each pair in the back-to-back arrangement according to Fig. 8b.
Fig. 9a shows a novel cell unit comprising formed port features; Fig. 9b shows two such cell units arranged in a back-to-back arrangement with outwardly facing active cell chemistry layers; and Fig. 9c shows a bank of cell units comprising two pairs of cell units, each pair in the back-to-back arrangement according to Fig. 9b.

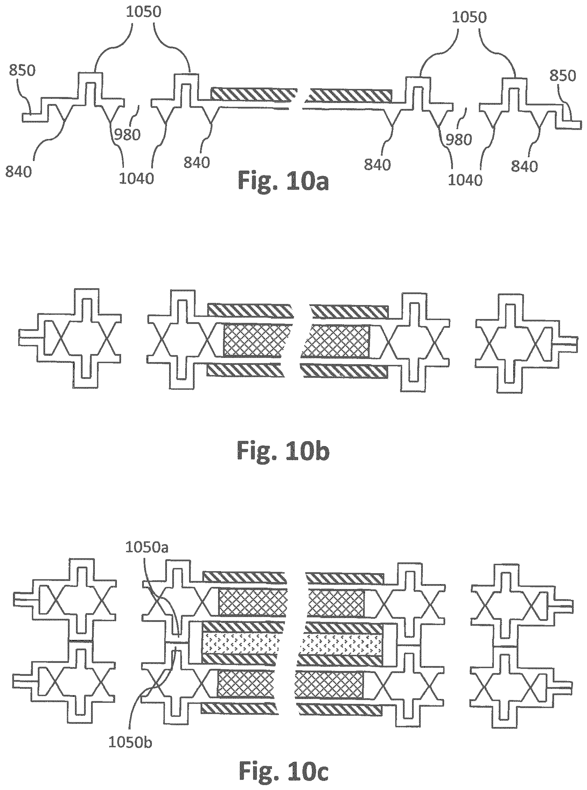

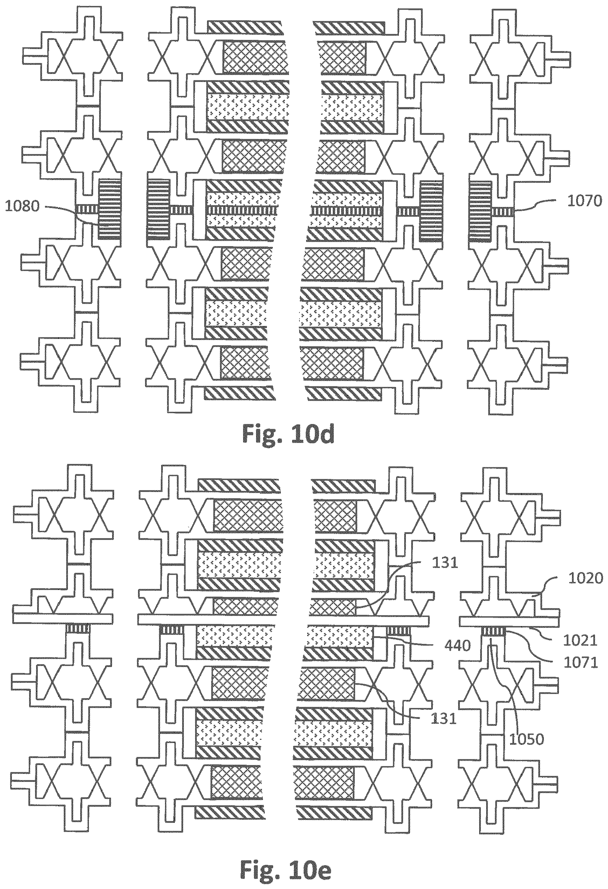

Fig. 10a shows a further novel cell unit comprising formed port features; Fig. 10b two such cell units arranged in a back-to-back arrangement with outwardly facing active cell chemistry layers; Fig. 10c shows a bank of fuel cell units comprising two pairs of cell units, each pair in the back-to-back arrangement according to Fig. 10b; Fig. 10d shows a cell arrangement comprising two banks of cell units, each bank comprising two pairs of cell units according to Fig. 10c; and Fig. 10e shows a cell arrangement comprising two banks of cell units, one of the banks having a single cell unit at an end of the bank.
Fig. 11 shows a first side of a cell unit in a perspective view from above.
Fig. 12a shows a pair of cell units according to Fig. 11a, with their respective metal support substrates welded together around a flanged perimeter; and Fig. 12b shows a cross-sectional view of the cell units according to Fig. 12a, from the flanged perimeter of the substrate and through a chimney.
Fig. 13 shows the pair of cell units according to Fig. 12 with an air side conductive support structure located over the cell units.
Fig. 14a shows the pair of cell units and conductive support structure according to Fig. 13, upon which is added a third cell unit; and Fig 14b is a cross-sectional view of the cell units according to Fig. 14a, from the flanged perimeter of the substrate through a chimney.
Fig. 15a shows a stack of cell units and conductive support structures; Fig. 15b is a cross-sectional view of the bank of cell units according to Fig. 15a, from the flanged perimeter of the substrate through a chimney. Fig. 15c shows a stack arrangement in which a pair of banks, each bank according to Fig. 15a, are stacked one atop of another with an insulating layer between adjacent banks;
Fig. 16a shows an alternative novel arrangement of a pair of cells in a back-to-back arrangement with outwardly facing active cell chemistry layers supported by a single, folded, substrate; Fig. 16b shows a bank of cell units comprising two pairs of cell units, each pair in the back-to-back arrangement according to Fig. 16a; and, Fig. 16c schematically shows a cell unit according to Fig. 16a comprising formed port features.
Fig. 17a shows an alternative novel cell unit comprising an arrangement of two pairs of fuel cells, each pair in a back-to-back arrangement with outwardly facing active cell chemistry layers, in which the two pairs of cells are supported by a single, folded, substrate; Fig. 17b schematically shows a cell unit according to Fig. 17a comprising formed port features.

### Detailed description

A list of the reference signs used herein is given at the end of the specific embodiments. Repeat use of reference symbols in the present specification and drawings is intended to represent the same or analogous features or elements.

It will be apparent to those of ordinary skill in the art that various modifications and variations can be made in the present invention without departing from the scope of the invention. For instance, features described as part of one embodiment can be used on another embodiment to yield a still further embodiment. Thus, it is intended that the present invention cover such modifications and variations as come within the scope of the appended claims and their equivalents.

In the following description, air is used as the oxidant. Any reference to "oxidant" elsewhere can therefore be construed as a reference to "air", and vice versa.

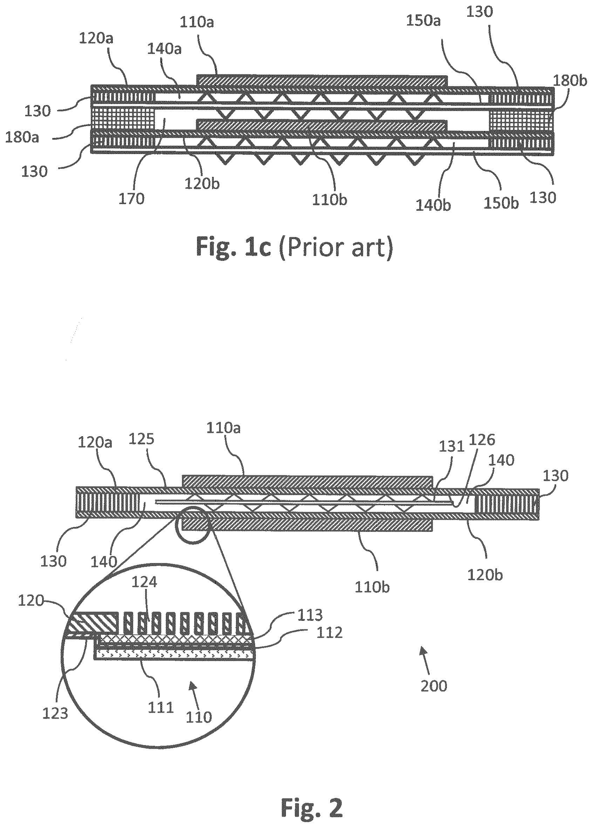

Referring to Figure 2, an arrangement 200 of a pair of cell units arranged back-to-back is shown. The pair of cell units 200 has a first cell unit 110a supported by a first metal support plate 120a and a second cell unit 110b supported by a second metal support plate 120b. Each metal supported cell unit 110a, 110b comprises cell chemistry layers 111, 112, 113 deposited or coated upon a metal substrate 120 to form an electrochemically active layer 110. An anode layer 113, an electrolyte layer 112 and a cathode layer 111 are successively laid down over a porous region 124. However, in some cell arrangements that order may be reversed (such that the cathode layer is closest to the substrate).

As in Fig. 1, the metal substrate 120 is a metal foil, usually a ferritic stainless steel. The porous region 124 comprises an array of through-holes formed by drilling (or other means, for example etching) extending from the first side 125 to the opposite side (second side 126) of the metal substrate 120, the porous region being surrounded by a non-porous (solid) region.

The anode layer 113, electrolyte layer 112, and cathode layer 111 may be formed by deposition, e.g. chemical vapour deposition, electrostatic deposition, spray deposition, spin-on deposition, powder deposition or the like, onto the planar metal substrate 120. The process may be a two-stage process, with deposition of powder or granular material followed by sintering or other treatment to form each of the layers of the solid oxide cell. Each layer is a thin layer such that none of the layers is self-supporting; that is to say, the metal substrate is required to give support to the solid oxide chemistry layers. Other barrier layers may also be provided, for example an extended electrolyte layer 123. As with the prior art cell, the electrolyte layer is coated over the side edges of the innermost electrode and extends over the metal substrate thereby sealing the gas within the porous region and innermost electrode.

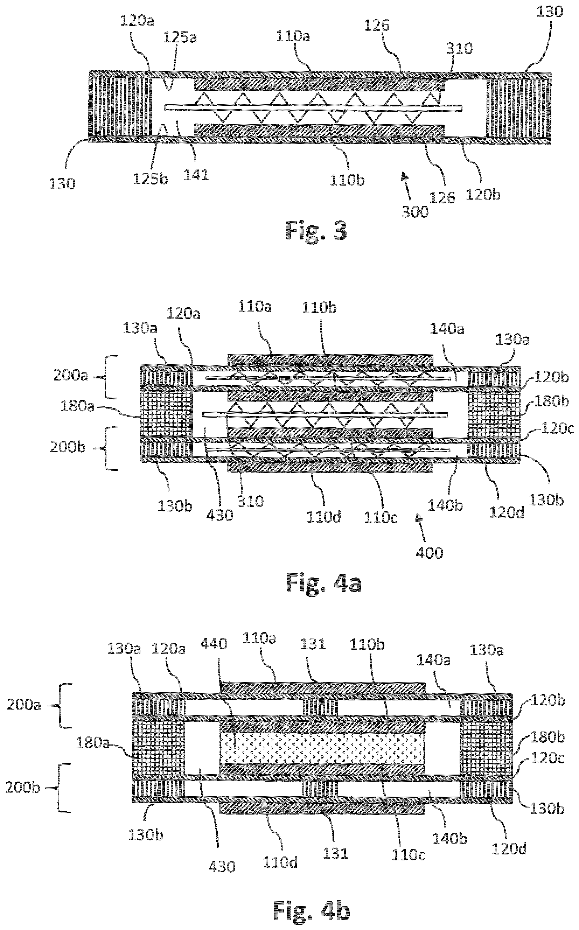

In Fig. 2, each metal substrate 120a, 120b has a first side 125 and a second side 126 with a porous region 124 extending therebetween. The porous region 124 allows fluid on the second side 126 of the metal substrate 120 to reach one side of the electrochemically active layer 110 (the anode layer as shown in the Figures). The electrochemically active layer 110 (comprising anode layer 113, electrolyte layer 112, and cathode layer 111) is supported by the porous region 124. The second sides 126 of two metal substrates 120a, 120b are attached to opposite sides of one or more spacers 130 such that the cell units have like-sides placed in a back-to-back arrangement. This arrangement forms a first fluid volume 140 between the pair of metal substrates 120a, 120b. A support structure 131 may be disposed between the pair of metal substrates to react a required compression load, if any, and for current collection from the outermost electrode (see figure 4a description). In this way, the anode layers 113 of two cell units face each other across the first fluid volume 140. Where the anode layer 113 (or fuel electrode) of two cell units face each other across the first fluid volume 140, the pair of metal substrates will encase a fuel volume and the support structure 131 will only be exposed to fuel. In this instance the support structure can provide a secondary function of providing support for catalyst required for internal reforming of fuel. That volume will need to be sealed such that fuel gas cannot come into contact with oxidant gas.

To explain, fuel (e.g. hydrogen or hydrocarbon gas) needs to contact the fuel electrode or anode (in an SOFC) side of the cell unit and oxidant (e.g. air or oxygen) needs access to the air electrode or cathode side of the cell unit. Accordingly, when the anode is adjacent the metal substrate, the fluid volume between the support plates (in this case the "first fluid volume") is preferably for fuel. However, in a back-to-back arrangement, if a cathode layer 111 were instead to be deposited first, the first fluid volume would need to be an oxidant fluid volume.

Support structure 131 may be similar to interconnect 160 of Fig. 1b or interconnect 150a of Fig. 1c, but in this case it need not extend all the way to the spacers 130. Further, the support structure 131 of Fig. 2 is exposed to only one environment (either fuel or oxidant) and need not separate two environments. Thus, the chemical, thermal and mechanical demands placed on the support structure are lesser than in the prior art designs. Further, the support structure 131 should be sufficiently open to allow fluid to pass from one side of the support structure 131 to the other.

The support structure 131 need not be conductive, though it may be conductive. This is because the spacers 130 (which separate the two metal substrates in the arrangement of a pair of cell units) may be conductive, thus allowing electrical connection between the two metal substrates. The electrical connection through the spacers 130 may be assisted by welding or brazing through the metal substrates and the spacer. This weld, or braze, also seals the first and second fluid volumes. Further, because electrical interconnection between cells is not reliant on electrical connection between the support structure 131 and the metal substrate 120, the compression load through the support structure (and thus the strength of the support structure) can be reduced in comparison to the interconnect 150 of Fig. 1. Support structure 131 is illustrated schematically as corrugated elements, but other pressed three-dimensional features, a mesh structure or an expanded metal may be used.

For reasons of clarity, there is not shown in Fig. 2 (and in subsequent Figs. 3-7) ports provided in the metal substrate 120 which allow fluid (typically fuel) delivery to the first fluid volume 140. Ports through the metal substrates 120 may be sealed by gaskets or welds between the metal substrates and the spacer plates 130. The ports and spacers (or formed features around the ports) together form chimneys for transport of first fluid through a stack. Port features or manifolds allow a portion of fluid to exit a chimney and enter the first fluid volume 140. One or more of the chimneys provide for exit of exhaust gasses from the first fluid volume 140.

Fig. 3 shows an alternative, face-to-face arrangement of a pair of cell units 300. The arrangement comprises a first electrochemically active layer 110a supported by a first metal substrate 120a and, a second electrochemically active layer 110b supported by a second metal substrate 120b. Each of the pair of electrochemically active layers 110a, 110b has cell chemistry layers comprising a cathode layer 111, an electrolyte layer 112 and an anode layer 113 as described above. Each of the metal substrates 120a, 120b comprises a first side 125 and a second side 126 with a porous region 124 extending therebetween and upon which the electrochemically active layers 110a, 110b are supported. The first sides 125 of the metal substrates 120a, 120b are attached to opposite sides of one or more spacer plates 130 such that the electrochemically active layers 110a, 110b are inwardly facing one another in a face-to-face arrangement. This arrangement forms a first fluid volume 141 between the pair of metal substrates 120a, 120b. A conductive support structure 310 may be disposed between the pair of metal substrates. That is, the cathode layer 111 of two cell units face each other across the first fluid volume 141 so as to form the first fluid volume 141. In this case, the first fluid volume 141 is typically an oxidant (air or oxygen) volume. The conductive support structure 310 is similar to the support structure 131, except that the conductive support structure 310 acts as a current collector to conduct current from the (outermost) electrode layer which is distal from the metal substrate 120, in this case the cathode layer 111.

The support structure 131 and conductive support structure 310 are illustrated schematically as corrugated elements, but again other pressed three dimensional features may be used. They may serve to provide electrical connection between adjacent cell units. In doing so, support structures and conductive support structures serve to resist buckling or warping of the metal substrates on either side. The support structures 131 and conductive support structures 310 preferably have gaps (not visible in the cross section shown) for free circulation of fluid through them, left-to-right in the diagram (or right-to-left or front-to-back or back-to-front) and up-to-down in the diagram (or down-to-up or toward and away from the metal substrates), i.e. they are permeable.

Fig. 4a, shows a bank 400 of cell units comprising two pairs of solid oxide cells 200a, 200b, each pair mounted back-to-back in accordance with any those of Fig. 2. (The bank comprises a first pair of electrochemically active layers 110a, 110b and a second pair of electrochemically active layers 110c, 110d.) The two (or more) pairs of cell units are stacked one on top of another with one or more gaskets 180a, 180b therebetween. The gaskets 180a, 180b connect the first fluid volumes of adjacent cell pairs whilst sealing the first fluid volume from the second fluid volume. A current collector on the outermost electrodes 310 is located within the second fluid volume 430, and may be similar to the conductive support structure 310 as previously described. It could be provided as a pressureless current collector.

Fig. 4b shows a bank of cell units similar to that of Fig. 4a but support structures 131 are shown as short spacers placed inside the first fluid volumes 140a, 140b. The support structures 131 are electrically conductive so as to electrically connect the respective metal substrates on either side thereof (but they need not be - this function can be provided at the edges, as will be described). The support structures 131 may be components separate from the metal substrates 120, or may be formed by pressed or formed features of the metal substrates, provided they are outboard of the cell chemistry. The support structures 131 may also act to prevent bowing or bending of the metal substrate 120 as a result of compressive forces required for current collection..

In Fig. 4b a generic separator layer 440 is shown in place of conductive support structure 310. Separator layer 440 comprises a mesh, expanded metal, or a combination thereof. It is located inside the second fluid volume 430 to provide an interconnect between the second cell unit 110b of the first pair of cell units 200a, and the first cell unit 110c of the second pair of cell units 200b. The layer 440 has spaces or interstices for circulation of oxidant (or fuel, as the case may be).

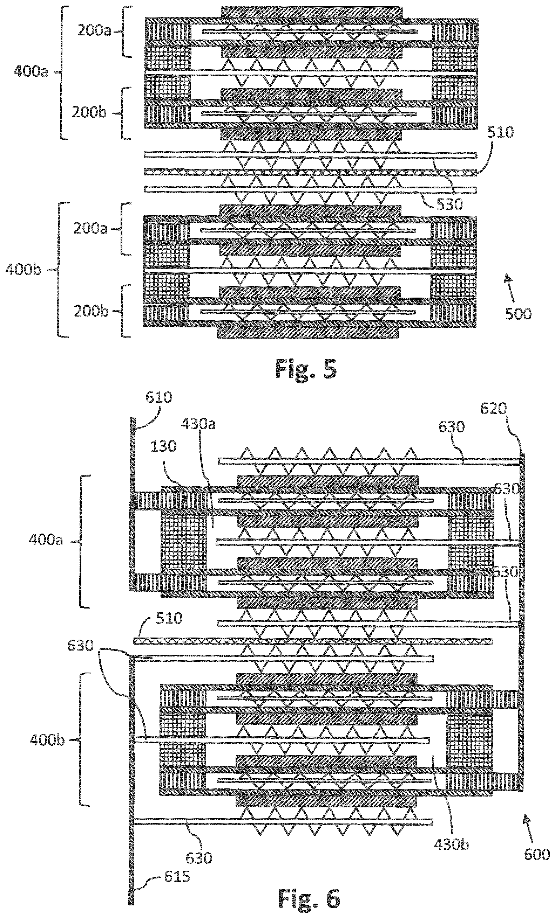

Fig. 5 shows a stack 500 of cell units comprising two or more banks 400a, 400b of cell units 200a, 200b stacked one on top of the other. Each bank 400a, 400b is similar to the bank 400 of Fig. 4a or Fig. 4b. The stack further comprises an insulating layer 510 placed between each pair of banks 400a, 400b to electrically insulate the banks from one another. Conductive support structures 530 are provided to contact the electrochemically active layer 110, to act as a current collector (for the cathode layer if the first fluid volume is the fuel volume (hydrogen for a SOFC, for example) and the second fluid volume is the oxidant volume). Further banks may be added to the stack by repeating the conductive support structures 530 and the insulating layer 510.

Two pairs of cell units are shown in each bank 400a,b of Fig. 5. However, one pair of cell units or greater than two pairs may also be used. See Table 1 (below).

Figure 6 shows a stack 600 of two banks of cell units, similar to those of Fig 4a, Fig 4b, and Fig. 5. (There may be more such banks, but only two are shown.) Busbars 610, 615, 620 are provided. Busbar 610 connects to conductive spacer plates 130 between the metal substrates 120 of each pair of cell units of the first bank 400a (and thence to their metal substrates). Thus, typically busbar 610 electrically connects anodes in the first bank. Busbar 615 connects to conductive support structure 630 between electrochemically active layers 120 of the second bank 400b. Thus, typically busbar 615 electrically connects cathodes in the second bank. Busbar 620 connects conductive support structures 630 of the first bank 400a to conductive spacer plates 130 of the second bank. Thus, typically busbar 620 electrically connects cathodes in the first bank and anodes in the second bank. The busbars are preferably welded to their respective separator plates 130 and conductive support structures 630. The separator plates 130 are shown extended outwards to meet the busbars 610, 620, alternatively, the metal substrates 120 may be extended to meet and electrically connect to the busbars 610, 620. Busbars 610 and 615 may be connected to further cell units of an adjacent bank (not shown), therefore having a similar arrangement to busbar 620. Alternatively, busbars 610, 615 may not be connected to an adjacent bank of cell units, and may instead be connected to a power take-off, to route power out of the stack for external use.

In this way, a parallel-series arrangement of cell units is provided. All anodes of a particular bank are connected in parallel. Likewise, all cathodes of a particular bank are connected in parallel. This assists in meeting current requirements placed upon the stack of cell units. Cell units of one bank are connected in series with cell units of an adjacent bank. The cathodes of a bank (for example, first bank 400a) are connected in series with the anodes of an adjacent bank (for example, second bank 400b). This assists in meeting voltage requirements placed upon the stack. More banks may be added to further increase voltage.

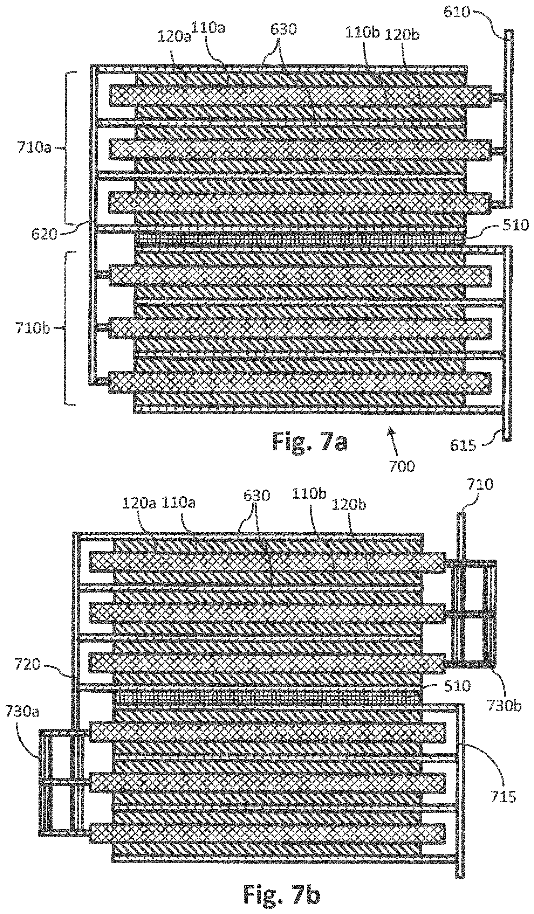

Fig. 7a more schematically shows a stack 700 of two banks 710a, 710b of cell units. The stack comprises banks of cell units stacked on top of one another with an insulating layer 510 placed between each pair of banks 710a, 710b. Further banks may be added to the stack 700 by repeating insulating layer 510 and bank 710.

Each bank comprises multiple pairs of cell units. In the illustrated example, there are three pairs of cell units to each bank. However, one, two, or more than three pairs of cell units may also be used. See Table 1 (below).

Fig. 7a is simplified with respect to Fig. 6, in order to show the electrical connections of cell units between banks. Again, all anodes of a particular bank are connected in parallel. Likewise all cathodes of a particular bank are connected in parallel. This assists in meeting current requirements placed upon the stack of cell units. Cell units of one bank are connected in series with cell units of an adjacent bank. The cathodes of a bank (for example, first bank 710a) are connected in series with the anodes of an adjacent bank (for example, second bank 710b). The assists in meeting voltage requirements placed upon the stack.

Figure 7b shows a stack of two banks of cell units, similar to the banks described with reference to Figs. 6 and 7a. It further comprises conductive gaskets 730a and 730b provided between metal substrates of adjacent pairs of cell units to deliver fuel between cell pairs. The conductive gaskets 730 take the role of the busbar 610 in Fig. 6 in electrically connecting the anodes of a bank of cell units. A busbar 720 is then used to connect cathodes in the first bank with anodes in the second bank. Busbar 715 typically electrically connects cathodes in the second bank (and may connect to anodes in a further bank (not shown).

Two banks, each with three pairs of cell units are shown in Fig. 7b. However, one, two or more than three pairs of cell units may be present in each bank, and a stack having multiple banks may be formed.

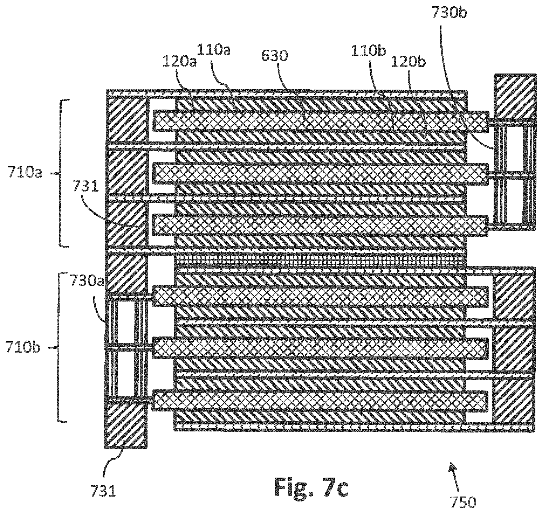

Figure 7c shows a stack 750 of two banks of cell units as described with reference to Figure 7b and further comprises solid blocks 731 placed between conductive support structures 630 which themselves are between each pair of cell units. The solid blocks 731 electrically connect the first and second banks of cell units, as previously described, and obviate the need for busbars and welding of busbars to the stack of cell units.

**Table 1**

| | | | | | | | |
|---|---|---|---|---|---|---|---|
| Number of cell units in bank | 2 | 4 | 6 | 10 | 12 | 14 | 16 |
| % Increase in Volumetric Power Density | 19% | 26% | 29% | 30% | 31% | 32% | 33% |

Table 1 shows the increase in volumetric power density relative to the prior art design of Fig. 1 as a function of the number of cell units in a bank, when the cell units are operated as MS-SOFC units. Operated in MS-SOFC mode, there is a 19% increase in volumetric power density by having a bank of just two cell units (i.e. one pair of cell units in a back-to-back or face-to-face arrangement). This is because one fluid volume is now shared by two electrochemically active layers on two metal substrates 120. Therefore, the shared fluid volume height can then be reduced compared to the combined height of 2 fluid volumes in the prior art design since the amount of viscous losses due to frictional effects at the walls of the fluid volume are reduced.

The skilled person will understand that these advantages apply equally to operating the cell units as MS-SOEC units.

The increase in volumetric power density increases for banks having four cells (i.e. two pairs of cell units in a back-to-back or face-to-face arrangement). This is because for a given number of cells in a stack, less isolating layers between banks (which increase stack height) are required.

The gain in volumetric power density is less pronounced on increasing from two pairs of cell units to three pairs of cell units per banks, and so forth. Further, as the number of cell units per bank increases, so does the current produced by a bank. This may be advantageous in high current applications, but leads to greater resistive losses and may require components to be made of thicker, or more conductive, materials to withstand or mitigate resistive heating.

The metal substrate may be entirely flat such that it lies entirely in a single plane, or, as described below, beyond the cell chemistry layers, the substrate may be pressed or formed such that it has 3D features, which features may be created before or after deposition of the cell chemistry.

### Spacerless Cell Unit Pair Variants

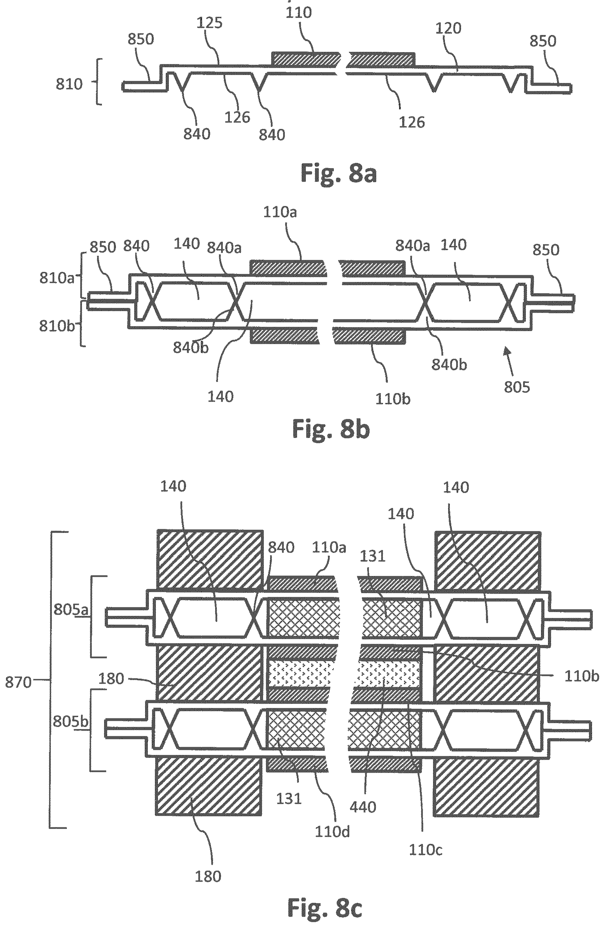

The next embodiments of Figs. 8 to 10 show cell unit pairs according to the present invention where the cell units are connected directly together so that they abut one another and these pairs may be referred to as spacerless cell unit pairs. To achieve the required common fluid volume between the cell units, each metal substrate is not flat but rather has formed (e.g. pressed or stamped) 3D features which obviate the need for a spacer to create a fluid volume between the cell units. These examples are shown with back-to back arrangements by way of example. The spacerless cell unit pairs of Figs. 8 to 10 are not shown to scale, rather there is a discontinuity in the active cell chemistry (not fully shown) so that the ends where the ports are may be shown in more detail. The actual ports through the metal substrate 120 are not shown for reasons of clarity.

Figure 8a shows a cell unit 810 that comprises an electrochemically active layer 110 deposited or coated on a metal substrate 120. (In the figure, the active layers and substrate are truncated at the centre in order to focus on the edges.) The thin electrochemically active layer 110 is again laid down upon a supporting metal substrate 120 as described previously. The second side 126 of the metal substrate 120 has formed (e.g. pressed or stamped) features or protrusions 840 extending out (down as shown) from its surface. The protrusions 840 are illustrated as triangular (i.e. cones or pyramids in three-dimensions) but may have other cross-sectional shapes such as domes or bumps and may have peaks. The protrusions 840 are distributed around ports (not shown) to allow fluid to flow from or to the ports to or from the first fluid volume (i.e. fluid transfer between the ports and fluid volume). In this way, the protrusions transfer stack compression load around the port whilst maintaining the required fluid channels open from a fluid chimney to the first fluid volume.

The apexes, or peaks, of the protrusions (or features formed in the substrate) 840 extend away from the second side 126.. The metal substrate 120 further comprises a formed feature comprising a flange 850 at its periphery. The flange is orientated in a plane which is parallel to, and vertically separated from (lower, in the orientation shown) than the main plane of the metal substrate 120. The main plane of the metal substrate 120 is that which supports the electrochemically active layers 110. The protrusions 840 and flange 850 are formed in the metal substrate 120 by pressing, stamping, or otherwise forming a planar metal substrate. The porous region and electrochemically active layers 110 may be formed before or after the forming of protrusions 840 and flange 850, but preferably the protrusions 840 and flange 850 are formed before the depositing the electrochemically active layers 110 to reduce the chance of damage to said layers.

Figure 8b shows a spacerless pair of cell units 805 in a back-to-back arrangement, each cell unit 810a,b is as described with reference to Figure 8a. As shown, the pair comprises a first and a second cell unit. The first cell unit 810a and second cell unit 810b are connected back to back, with the peaks of the protrusions 840a extending from the first cell unit touching or abutting the protrusions 840 extending from the second cell unit. The pair of cell units 805 forms a continuous fluid volume 140 between the first and the second metal substrates. The volume is sealed by a weld, brazing or similar technique around peripheral flange 850. As will be apparent from Fig. 8b, protrusions 840 and flange 850 obviate the need for a spacer (for example spacer 130 of Fig. 4) between cell units 810a,b in the pair of cell units 805 in a back-to-back arrangement.

Figure 8c shows a bank 870 of cell units comprising two spacerless pairs of cell units, each pair of cell units 805a,b is as described with reference to Fig. 8b. As described previously, there may be one pair, or more than two pairs of cell units in each bank. The pairs of cell units 805a,b are positioned in a stacked arrangement: each on top of the one below, with one or more gaskets 180 providing a fluid connection between the first fluid volumes of adjacent pairs as previously described. As previously described these gaskets can be electrically conductive and electrically connect the substrates of adjacent cell pairs. A conductive support structure 440 is provided between adjacent pairs of cell units to electrically connect the face of the electrochemically active layer which is distal from the metal substrate 120 (for example, to connect a cathode (the outermost electrode) of a first pair of cell units 805a with a cathode of a second pair of cell units 805b). The conductive support structure 440 is similar to the conductive support structure 440 described previously, it may comprise a mesh, expanded metal, alternatively, it may be similar to conductive support structure 310. A support structure 131 may, optionally, be provided within fluid volume 140, as described previously.

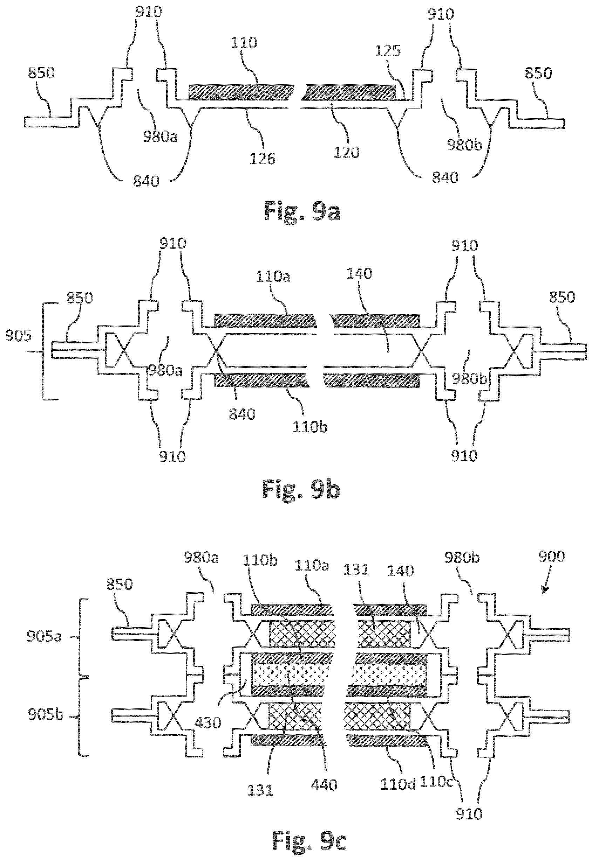

Figures 9a-c show a variation on the cell unit of Fig. 8a-c. The cell unit of Fig. 9a is provided with raised port features 910 which surround a fluid port 980. The raised port features are preferably annular. The raised port features comprise a planar surface which is parallel to and vertically separated from (higher, in the orientation shown) than the main plane of the metal substrate 120. The planar surface of the raised port features 910 is in the opposite direction from the main plane of the metal substrate to the plane of the flange 850. That is, the metal substrate has three levels, each of which are planar and vertically separated: the planar surface of the raised port features 910 above the main plane of the metal substrate, which is itself above the plane of the flange 850. The raised port features 910 are formed in the metal substrate 120 by pressing, stamping, or forming a planar metal substrate, similar to, and preferably concurrent with, the protrusions 840 and flange 850. The protrusions 840 and raised port features 910 are arranged to transfer stack compression load around the port whilst maintaining the required fluid channels open from a fluid chimney to the first fluid volume 140.

Figure 9b shows a pair of cell units 905 as described in Fig. 9a. The first and second cell units are arranged back-to-back, with the peaks of the protrusions 840 extending from the second side of the first cell unit touching or abutting the protrusions 840 extending from the second side of the second cell unit. The pair of cell units enclose a first fluid volume 140 between the first and the second metal supporting plates. The height of the first fluid volume 140 is defined by the protrusions 840 and flange 850, and is sealed by a weld around the flange 850.

Figure 9c shows a bank 900 of cell units comprising two pairs of cell units, each pair of cell units 905a,b as shown in Fig. 9a. As described previously, there may be one pair, or more than two pairs of cell units in each bank, and the banks may be stacked and electrically connected as described previously. The pairs of cell units 805a,b are positioned in a stacked arrangement: each on top of the one below, the stack arrangement forms a second fluid volume 430 between adjacent pairs of cell units.

The raised port features 910 of adjacent cell pairs interface to space adjacent pairs of cell units and create second fluid volume 430. The height of the raised port features is sufficient to create the second fluid volume, thus also spacing the electrochemically active layer 110 of a cell unit in a first pair of cell units from an electrochemically active layer 110 of a cell unit in a second, adjacent, pair of cell units. The raised port features 910 and ports 980 form a fluid chimney for delivery of fluid to (or exhaust from) the first fluid volume 140.

The planar surface of a raised port feature of a first cell unit interfaces with a corresponding planar surface of a raised port feature of a second cell unit, the second cell unit being in an adjacent pair of cell units to the first cell unit. Thus, in contrast to the previously described cell units, the raised port features 910 obviate the need for gaskets (such as gaskets 180 described with reference to Fig. 4) between and spacing adjacent pairs of cell units to create the second fluid volume. These cell unit pairs may be referred to as gasketless, spacerless cell pairs which may be formed into stacks with an even lower part count.

The interface between the planar surface of a raised port feature of a first cell unit and the corresponding planar surface of a raised port feature of a second cell unit must be sealed in order to seal the chimney, and to prevent mixing of fluids in the first and second fluid volumes. The seal may be made using a gasket: either a preformed gasket or, preferably using a sealing contact paste or liquid that forms an insitu seal. The latter may be disposed in an annular groove in one or both of the interfacing planar surfaces. An (e.g. compressible) annular gasket could additionally be placed - and indeed fixed in position - around the exterior of the raised port features, if desired. Alternatively, and advantageously, the seal may be made by welding a seal around the interfacing planar surfaces of the raised port feature, this further reduces the part count.

Figure 10a shows a variation on the cell unit of Fig. 9a. The raised port features 1050 are moved radially outward from the circumference of the port 980, in comparison to the raised port features 910 of Fig. 9. This enables the planar surface of the raised port features 1050 to be supported by protrusions 840, 1040 on their radially inward and radially outward (with respect to the port 980) sides. The raised port features 1050 are annular rings supported on both sides. Additional protrusions 1040 are shown, which are similar to protrusions 840, except that they are disposed between the port 980 and the raised port feature 1050, while the protrusions 840 are disposed radially outward (with respect to the port 980) of the raised port feature 1050. The raised port features 1050 transfer compression through a stack of cells, via protrusions 840 and 1040. In this way, the raised port features 1050 are arranged to transfer stack compression load required for sealing of gaskets between banks (see figure 10d) around the port whilst maintaining the required fluid channels open from a fluid chimney to the first fluid volume 140.

Figure 10b shows how a pair of such cell units arranged back-to-back such that the additional protrusions 1040 abut against each other (in a similar manner to protrusions 840) and provide separation between the metal substrates to allow fluid to enter the first fluid volume 140 from the fluid chimney and ports 980.

Protrusions 1040 are shown as protruding into the first fluid volume 140. They may protrude in alternating manner into and away from that volume. This is described below. Where they protrude away from the fluid volume 140, they protrude to the same level as the raised port features 1050 so as to serve to share stack compression load with the raised port features 1050. Protrusions 840 could alternate likewise.

Figure 10c shows a bank of such cell units and illustrates how the raised port features 1050a of one pair of cell units abuts the raised port features 1050b of an adjacent pair of cell units. The raised port features interface and are sealed to define the chimney, as described with reference to Fig. 9c.

Fig. 10d shows two banks of pairs of cell units in a stacked arrangement. Between banks of cell units, there is provided an insulator layer 1070 which separates and electrically isolates adjacent planar surfaces of the raised port features 1050. Isolator layer 1070 (e.g. electrolyte layer) may be similar to insulating layer 510 (as previously described with respect to Fig. 5), or may be in the form of an insulating paste. An additional gasket 1080 is provided inside the chimney, positioned radially inward (with respect to the port 980) of opposing raised port features 1050a and 1050b of adjacent banks and disposed above protrusions 1040 to seal it and transfer compression force through the stack. Alternatively, the annular insulator 1080 may be provided outside the chimney, positioned radially outward (with respect to the port 980) of opposing raised port features 1050a and 1050b of adjacent banks and disposed above protrusions 840 to transfer compression force through the stack. The insulating layer 1070 and the insulating gasket 1080 together or individually act to seal the fluid chimney (and so define the first fluid volume, separate to the second fluid volume), provide electrical isolation between banks, and transfer compression force through the stack. The insulating layer may be chosen such that it fulfils all these requirements, and the gasket 1080 may be dispensed with to further reduce the part count. The cell units of Figs. 9a-c may be formed into a similar banked arrangement to that of Fig. 10d. Further, the banks in the banked arrangement of Fig. 10d may be electrically connected in the manner described with reference to Figs. 6 to 7c.

Fig. 10e shows an alternative electrical connection between two banks of pairs of cell units in a stacked arrangement. In this arrangement a single cell unit 1020 is provided at an end of a bank (could be at the top or bottom of bank as shown). The single cell unit 1020 is similar to the cell unit described with reference to Fig. 10a. The single cell unit 1020 is attached (for example, by welding or brazing) to a non-porous metal sheet 1021 to form an enclosed fluid volume between the single cell unit 1020 and the non-porous metal sheet 1021 (i.e. there is no fluid communication from one side of the non-porous metal sheet 1021 to the other side of the non-porous metal sheet 1021 other than via ports through the non-porous metal sheet 1021, which ports correspond to ports in the cell unit 1020). A spacer 131 is disposed within the enclosed fluid volume between the single cell unit 1020 and the non-porous metal sheet 1021, spacer 131 is as previously described. The non-porous metal sheet 1021 is an undrilled metal substrate having no active cell chemistry layers. The non-porous metal sheet 1021 incorporates holes to form ports in fluid correspondence with the cell unit 1020. The non-porous metal sheet 1021 is shown as a flat, unformed sheet, but may equally have formed port features similar to the cell unit 1020.

As is apparent from Fig. 10e, and in contrast to Fig. 10d, there is no insulator layer 1070 separating the banks across their width; the conductive support structure (separator 440) at an end of the first bank directly contacts the non-porous metal sheet 1021 at an end of the adjacent second bank. The conductive support structure (separator 440) is as previously described. An insulator layer or insulating gaskets 1071 disposed on the raised port feature 1050 of the cell unit at the end of the first bank electrically isolates raised port feature 1050 from the non-porous metal sheet 1021 at the end of the adjacent, second bank and seals a fluid inside the manifold. Thus, adjacent banks are connected in series, with face to face contact over a large portion of the cell area (via separator 440), without the need for additional electrical connections. For example, one bank may have its conductive support structures (or interconnectors) all connected in parallel and the outermost conductive support structure (separator 440 or interconnect) may contact (physically and electrically) and make a series connection with a non-porous metal sheet of an end pair of units of the adjacent bank (the pair comprising the non-porous metal sheet 1021 and the cell unit 1020). In that adjacent bank, the non-porous metal sheet and substrate are at the same potential and are connected in parallel to all the other metal substrates in that bank. Thus, parallel connected substrates in the adjacent bank are connected by a series connection to parallel connected interconnectors in the first bank.

An end pair of units of a bank (the pair comprising the non-porous metal sheet 1021 and the cell unit 1020, as per Fig. 10e) may be used in the banks of pairs of cell units described with reference to Figs. 2 to 9. In the arrangements described with respect to Figs. 6 and 7a-b, use of the single or unpaired cell leads to shorter busbars 610, 615, 620, 710, 715, 720 as said busbars are not needed to electrically interconnect adjacent banks. Said busbars remain to connect pairs of cell units within each bank, as described previously.

### Method of Assembly (for spacerless cell unit pair)

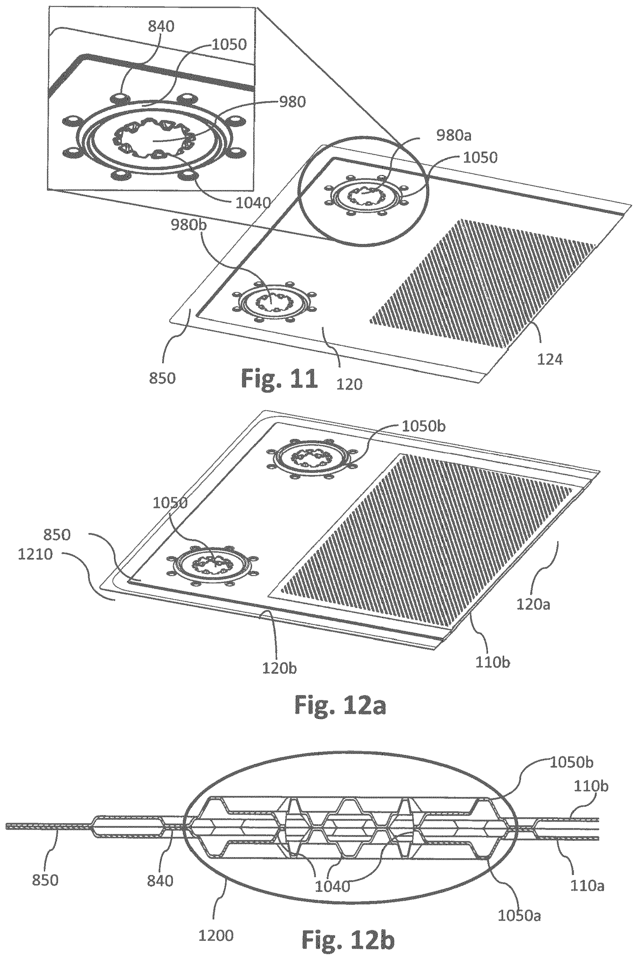

By way of example, one preferred method of assembly of a novel arrangement of a spacerless pair of cell units will now be described with reference to Figures 11 to 15.

As shown in Fig. 11 a cell unit comprises a metal substrate 120, the metal substrate having a first side uppermost and a second side underneath. The metal substrate comprises a porous region 124 with electrochemically active layers underneath. The electrochemically active layers comprising a cathode layer, an electrolyte layer and an anode layer as previously described. It will be appreciated that Fig. 11 shows a portion of a cell unit, that the extent of the unit has been cut through (at the right hand side, as shown) for clarity, and that a working version of the unit would continue past the right hand side of the image, having extended metal substrate and electrochemically active layers, encircled by the flange which forms a continuous periphery of the cell unit. Further ports may also be present.

Two ports 980a and 980b are shown in the cell unit; the ports are holes through the metal substrate 120. Radially outward from each port is an annular raised port feature 1050 (shown in Fig. 11 in the form of a trough or depressed ring). Protrusions 1040 are provided radially inward of the raised port features 1050. The protrusions 1040 are illustrated as alternating upward and downward and as being shaped as flat-topped pyramids, but may have other cross sectional shapes such as cones, domes or bumps and may have rounded tops. The raised port feature 1050 is further surrounded by upward protrusions 840 around and radially outward of the raised port feature 1050. The protrusions 840 are illustrated as raised bumps or domes but may have other cross sectional shapes such as cones flat-topped pyramids (and may be interspersed with downward protrusions).

The process of cell pair assembly begins with forming of a first cell unit (as described in previous embodiments) by stamping or pressing the metal substrate into shape and forming the port holes peripheral flange 850, protrusions 840 and 1040, and raised port features 1050 (with protrusions 840 protruding on the same side/in the same direction as flange 850 and raised port features 1050 on the opposite side/in the opposite direction).

Porous region 124 and electrochemically active layer 120 may be formed before or after (the latter is preferred) stamping or pressing the metal substrate, by methods described previously with respect to Figs. 1 and 2.

The port holes may also be referred to as fuel ports because, operated as a MS-SOFC they route fuel (for example, hydrogen gas) to the first fluid volume; operated as a MS-SOEC, they route gas, for example, hydrogen gas (as a product of the MS-SOEC cell units) from the first fluid volume.

A second such cell unit is provided, inverted and placed over the first cell, to form a first pair of cell units in a back-to-back arrangement, as shown in Figs. 12a and 12b. Figs. 12a and 12b show a first metal substrate 120a and a second metal substrate 120b disposed above the first metal substrate 120a. The two metal substrates 120a,b are welded together along weld line 1210 on flange 850 to form the pair of cell units. Optionally, a spacer (such as spacer 131) is placed in the first fluid volume before the second cell unit is offered up to the first cell unit.

Fig. 12b is a cross section through the port region of the pair of cell units of Fig. 12a. The protrusions 1040 alternate in direction (towards and away from the gap between the metal substrates 110a,b which make up the pair of cell units) in order to transfer the force of compression through the stack of cell units.

Once sealed, the inwardly projecting protrusions 1040 around the inner circumference of the annular raised port feature 1050 in the first and second cell units touch each other in an opposite and opposing relationship as seen in the cross-sectional view of Figure 12b (cross section of a chimney, which provides inlet to or exhaust from the first fluid volume, generally indicated by circle 1200). The same is true for the protrusions 840 around the outer circumference of each annular raised port feature 1050.

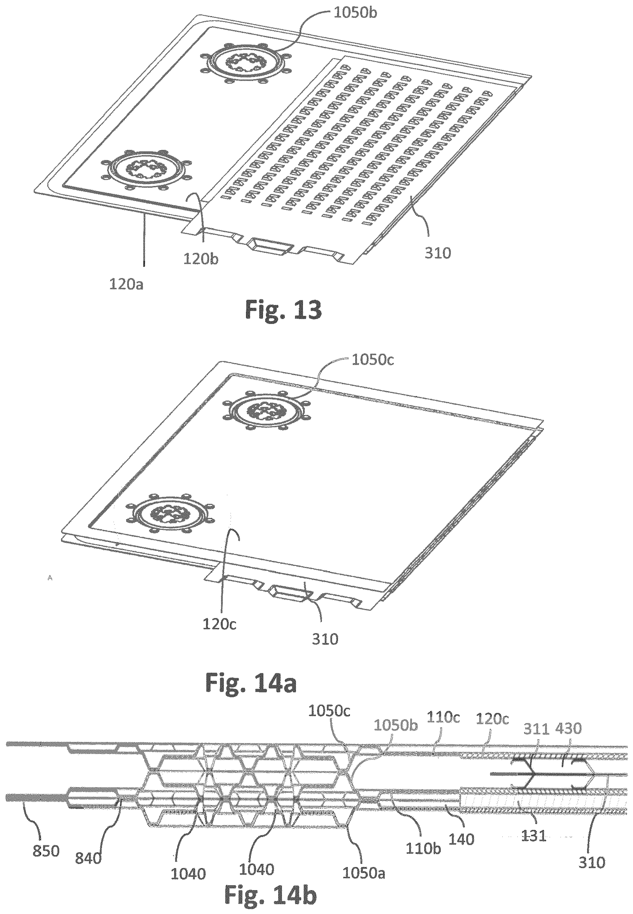

A method of assembly of a cell bank as previously described in any of the previous embodiments follows in the sequence of Figures 13 to 14.

As shown in Fig. 13, a bank of cell units comprises one or more pairs of cell units formed using the method described with reference to Figs. 11-12.

The process of bank assembly begins with placing a conductive support structure 310 over a first cell pair assembly, contacting the electrochemically active layer 110 to provide for electrical connection to the upper layer of the electrochemically active layer 110. The conductive support structure 310 extends beyond the edge of the metal substrates, at one or more sides thereof and is arranged to not interfere with the chimney formed by the ports and raised port features.

The conductive support structure may be a stamped metal plate, similar to conductive support structure 310 described previously, and it may be in the form of an electrically conducting mesh or similar (as described above with reference to separator 440).

Fig. 14a shows a third cell unit, having metal substrate 120c, placed over the first cell pair assembly such that the conductive support structure 310 contacts the electrochemically active layer of the third cell unit. The annular raised port feature 1050c and outward protrusions 1040 of the third cell unit contact the corresponding annular raised port feature and outward protrusions 1040 of the first cell pair assembly. Fig. 14b shows a cross section through the port region of the cell units of Fig. 14a. The third cell unit is then welded to the first cell pair assembly around the contacting raised annulus port features 1050b and 1050c along a weld line creating a seal between the port holes 980a and 980b in the first cell pair assembly and the third cell unit.

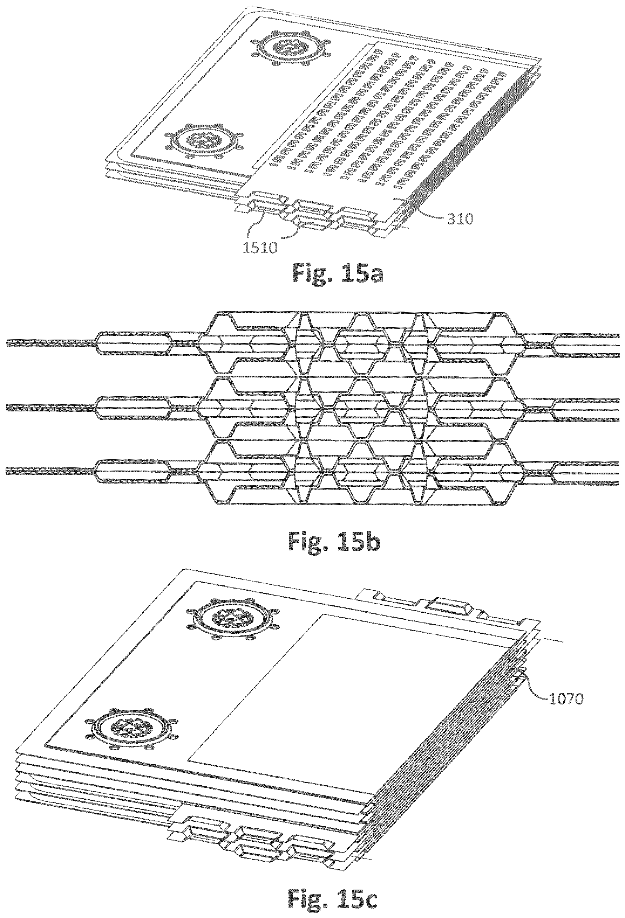

Edge tangs 1510 are also provided, as shown in Fig. 15a to electrically connect adjacent conductive support structures 310 outside of the cell substrate periphery. The electrical connection between edge tangs of adjacent conductive support structures may be improved by welding through interfacing surfaces of the edge tangs.

Further cell units can be added in the manner described with respect to Figs. 11-14 until the bank reaches the desired number of pairs of cell units. In such a bank no gaskets are required to create a seal around the fluid ports between the cell pairs and the cells form a complete welded assembly. Alternatively to the addition of a single cell unit in Fig. 14, pairs of cell units (as shown in Fig. 12) can be positioned upon each conductive support structure 310, however this makes welding around the fluid ports more difficult.

Fig. 15a shows a bank of cell units comprising three pairs of cell units formed using the method above. Fig. 15b is a cross section through the chimney region of the bank of cell units of Fig. 15a.

The conductive support structures 310 preferably comprise tangs (metal fingers) 311 as shown in Fig. 14b. The tangs are pressed in rows out of a flat metal sheet. E.g. alternate tangs in a row are pressed upwards and downwards out of the plane of the sheet. The tangs act as electrical contacts to electrically interconnect the faces of facing electrochemically active layers.

Further steps in a method of cell stack assembly are described with reference to Fig. 15c. As shown in Fig. 15c a stack of cell units comprises multiple bank assemblies formed as previously described with reference to Figs. 11 to 15b. A conductive support structure, an insulating layer, and a second conductive support structure are disposed upon the bank of cell units of Fig. 15, and disposed upon this is a second bank of cell units (similar to that of Fig. 15). Fig. 15c shows the two banks of cell units separated by an insulating layer 1070, similar to Fig. 10d. The annular raised port feature and protrusions between banks are also electrically isolated, in a similar many to that shown in Fig. 10d. The edge tangs of the first bank of cell units do not connect to the edge tangs of the second bank of cell units, similar to Figs. 6-7.

### Cell Unit Pairs Formed by Folding

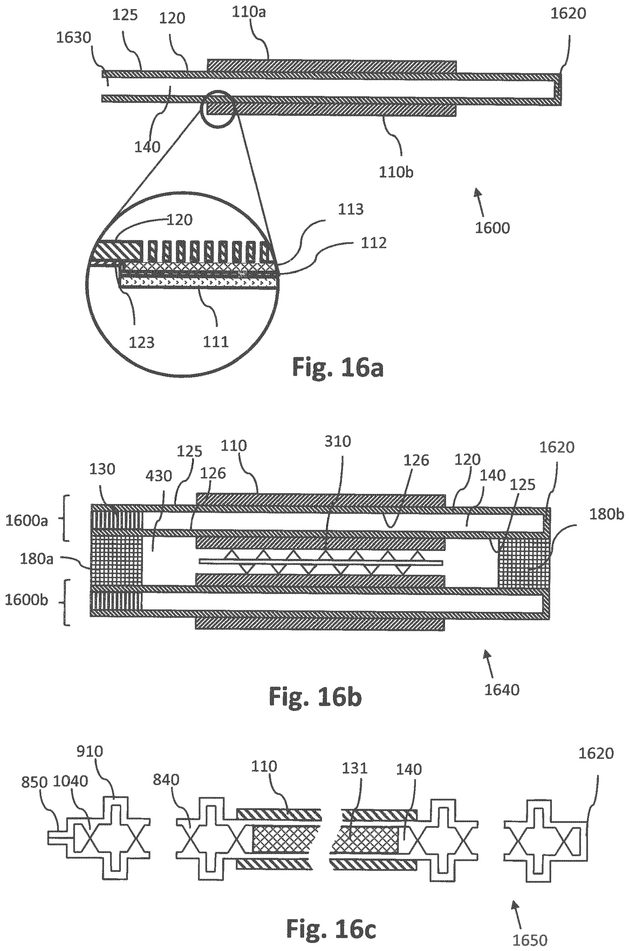

Figs. 16 to 17 show an alternative arrangement for forming pairs of cells with a back-to-back or face-to-face (not shown) arrangement. In this arrangement at least one cell unit pair are formed by folding the metal substrate such that the respective active layers of the opposed cell units are deposited on and supported by a common substrate. Since the metal substrate is conductive the electrodes closest to the metal substrate are electrically connected and at the same electric potential.

Fig. 16a shows a pair of folded cell units 1600 a,b in an arrangement in which a metal substrate 120 is in the form of a U-shape. The metal substrate 120 is formed from a single metal plate, or continuous metal substrate, which is folded through 180 degrees at fold zone 1620. The metal plate is provided with two porous regions and two electrochemically active layers 110a, 110b sealingly overlying said regions at two respective locations on the first side 125 of the metal plate, with the fold zone 1620 between the two electrochemically active layers 110a, 110b. For a SOFC, the two porous regions and associated electrochemically active areas 110 are separate, i.e. distinct; that is, the electrochemically active areas 110 are not deposited in the region of the fold zone 1620 because the electrochemically active areas 110 are inflexible.

As shown in Fig. 16a, once folded through 180 degrees at fold zone 1620, the electrochemically active layers overlie and are in register with one another, occupying substantially parallel respective (flat) planes, in a back-to-back (or face-to-face) arrangement. The fold zone 1620 at the folded end of the pair of folded cell units may comprise two 90 degree folds with a short section therebetween, the short section yielding the height of the first fluid volume 140.

Ports may be formed in substrate 120 between the electrochemically active areas 110 and the fold zone 1620 (and, at the other end of the folded substrate, between the electrochemically active areas 110 and the edge of the substrate) to form a chimney to supply (and/or exhaust) the first (and/or second) fluid volume; the first (second) fluid volume thus being internally manifolded.

The first fluid volume 140 may be sealed at the other end 1630 (i.e. the end distal from the fold zone 1620) using a (e.g. conductive) spacer, such as spacer 130 welded to the metal substrate 120 as further described with respect to Figs. 16b.

The arrangement of the pair of cell units 1600 forms a repeating unit and may be used in place of the pair of cells 200 in the cell banks described with reference to Figs. 4-10.

As previously described, if used for a solid oxide cell, usually the electrochemically active layer comprises anode layer 113, electrolyte layer 112, and cathode layer 111 deposited over a porous region 124, and an extended electrolyte coating 123 may also be present. The metal substrate (at the same polarity as the innermost electrode) may be connected to an electrical connection (not shown).

Fig. 16b shows how respective folded pairs of cell units 1600a, 1600b may be stacked upon each other to form a bank 1640 of cell units. Bank 1640 is analogous to the banks described with reference to Figs. 4-10. The folded pairs of cell units 1600a, 1600b each have a spacer 130 or gasket sealing the first fluid volume 140. Gaskets 180 a,b (which can be conductive as described previously) and conductive support structure 310 are positioned between adjacent folded pairs 1600a, 1600b. Between the pairs, gaskets 180a,b seal the internal manifolds that provide fluid communication between the adjacent cell pairs to the first fluid volume. The conductive support structure 310 provides electrical contact with the outermost electrode of the electrochemically active layers 110 of the adjacent folded units 1600a, 1600b, this being of opposite polarity to the metal substrate, and may be connected to an electrical connector (e.g. for power take off). Support structures (not shown) may be provided in first fluid volume 140 to resist bowing of metal substrate 120. Two or more banks 1640 may be arranged as described previously with reference to Figs. 5-10.

Fig. 16c shows a folded pair of cell units 1650 in a back-to-back arrangement and includes formed port features 840, 910, 1040, and a peripheral flange 850. The formed port features maintain chimneys for delivery and exhaust of the first fluid volume 140 removing the need for gaskets 180a,b. Thus, the arrangement has an internally manifolded first fluid volume (i.e. the ports and formed port features define an entrance to, and exit from, the first fluid volume 140 of each pair of cell units). The second fluid volume may be i) similarly internally manifolded by way of further ports and formed port features providing an entrance to, and exit from, the second fluid volume (not shown) or ii) may be externally manifolded by way of second fluid flow around the pair of cell units.

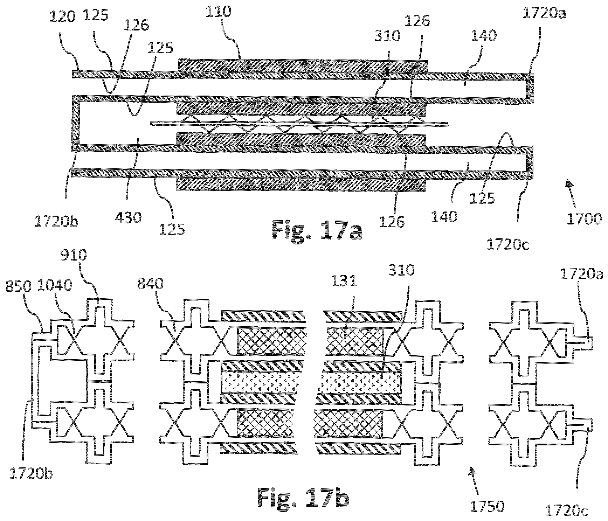

The folded pair of cell units 1650 may be substantially similar to the pairs of cell units described with reference to Figs. 9b, 10b, and 16a, except that there is the fold zone 1620 at one end of the peripheral flange 850. The fold zone 1620 is shown as replacing one end of the peripheral flange 850. The peripheral flange 850 is present at least at the end opposite to the fold zone 1620, and preferably around all three edges of the (e.g. rectangular) cell. Alternatively, the peripheral flange 850 is retained at all edges of the cell (e.g. all four edges of a rectangular cell), the fold zone 1620 is incorporated in the flange 850 (as shown in Fig. 17b), and the weld is made around the peripheral flange 850 to seal the first fluid volume 140.

The pair of cell units 1650 are formed from a metal sheet with formed features which is folded at fold zone 1620. The formed features are made by pressing a planar metal sheet. The formed features comprise protrusions 840 (in the form of dimples) around the chimney, chimney protrusion 910 (which may be annular and used with or without a gasket to seal the chimney), and protrusion 1040 which is outside the chimney. Protrusions 840 and 1040 assist in defining first fluid volume 140 by resisting the stack compression forces. A support structure 131 may be positioned between the porous regions of the substrate 120 to prevent bowing of the substrate 120 to define first fluid volume 140. The electrochemically active layer 110 may be deposited on the porous region 124 of the metal substrate 120 before or after folding the metal sheet.

Fig. 17a shows an alternative arrangement of cell units 1700 in which four electrochemically active areas 110 share the same metal substrate 120. Metal substrate 120 is formed from a single metal plate, or continuous metal substrate, which is folded at fold zones 1720a, 1720b, and 1720c. The single metal plate is provided with four porous regions over which four electrochemically active areas 110 are respectively deposited on the first side 125. For a SOFC or SOEC, the four porous regions and electrochemically active areas 110 are distinct. The metal substrate 120 is formed by folding the single metal plate through 180 degrees in a first direction (clockwise as shown in Fig. 17a) at the first fold zone 1720a, by folding the single metal plate through 180 degrees in a second direction (anti- clockwise as shown in Fig. 17a) at the second fold zone 1720b, and by folding the single metal plate through 180 degrees in the first direction (clockwise as shown in Fig. 17a) at the third fold zone 1720c. As shown in Fig. 17a, a back-to-back arrangement results. By folding in the opposite direction (i.e. anti-clockwise at the first and third fold zones, clockwise at the second fold zone), a face-to-face arrangement may be produced. The metal substrate 120 is thus in the form of a zig-zag. The first and third fold zones 1720a, 1720c define first fluid volumes 140, and the second fold zone 1720b defines the second fluid volume 430. Each fold zone 1720 may comprise two 90 degrees folds with a short section therebetween, the short section yielding the height of the first and second fluid volumes 140, 430, respectively.

Support structure 131 may assist in connecting opposed electrodes from adjacent electrochemically active layers 110, but their main role is in defining the first fluid volumes 140. Current collectors 310 collect current form the opposed (outermost) electrodes from adjacent electrochemically active layers 110 and in defining the second fluid volumes 430 (support structures are not shown in first fluid volume but are shown in second fluid volume in Fig. 17a where they electrically connect the outermost electrodes of the active layers (optionally with contact paste)). The skilled person will understand that a single metal plate may be provided with substantially any number of electrochemically active areas and a corresponding number of fold zones to provide a zig-zag cell with a corresponding number of paired cell units. The limiting factor will usually be the amount of current that can be drawn from multiple cells on a common substrate.

The arrangement of cell units 1700 on a single metal substrate 120 may be provided with spacers 130 or gaskets at the ends to seal first fluid volumes 140 and can be used as a single bank. Multiple banks may be arranged to form stacks of cell units as described previously.

Fig. 17b shows an arrangement of cell units 1750 in a back-to-back arrangement and includes formed port features 840, 910, 1040, and a peripheral flange 850. The pair of cell units 1750 are substantially similar to the pairs of cell units described with reference to Figs 9b, 10b, and 17a. The fold zones 1720 are shown as forming part of the peripheral flange 850; alternatively, they may replace parts of the peripheral flange (as shown for fold zone 1620 in Fig. 16c). The peripheral flange need not be welded at the first and third fold zones 1720a, 1720c, but the flanges adjacent the second fold zone 1720b are welded to seal the first fluid volumes 140.

As shown in Fig. 17b, the two pairs of cell units 1750 are formed from a single metal sheet with formed features which is folded at fold zones 1720. The formed features are made by pressing a planar metal sheet. The formed features comprise protrusions 840 (in the form of dimples) around the chimney, chimney protrusion 910 (which may be annular and used with or without a gasket to seal the chimney), and protrusion 1040 which is outside the chimney. Protrusions 840 and 1040 assist in defining first fluid volume 140 by resisting stack compression. The chimney is used to deliver fuel (for example, hydrogen gas) to the first fluid volume 140 when the cell units are operated as a SOFC and to exhaust (for example, hydrogen gas) from the first fluid volume when the cell units are operated as a MS-SOEC. A second chimney may be used to exhaust the first fluid volume when the cell units are operated as a MS-SOFC and to provide fluid to the first fluid volume when the cell units are operated as a MS-SOEC. Conductive support structures 310a may be positioned between the porous regions of the substrate 120 to prevent bowing of the substrate 120 to define first fluid volume 140. A conductive support structure 310b may be positioned between the electrochemically active layers 110 to aid electrical interconnection therebetween and to prevent bowing of the substrate 120 to define second fluid volume 430. The electrochemically active layer 110 may be deposited on the porous region 124 of the metal substrate 120 before folding the metal sheet. The two pairs of cell units 1750 described with reference to Fig. 17b, may be used as a single bank of cell units and multiple banks may be arranged to form a stack as previously described herein.

The stacks of the folded pairs of cell units are internally manifolded, that is, they have ports within the metal substrates 120 to form an internal manifold(s) or a chimney which connects the first fluid volumes 140 of each pair of cell units.

### Reference Signs:

### Prior Art - Introduction Section Only

- 90: Fuel cell repeat unit
- 110: Electrochemically active layer
- 111: Cathode layer
- 112: Electrolyte layer
- 113: Anode layer
- 120: Metal substrate
- 124: Porous region
- 130: Spacer plate
- 140: First fluid volume
- 150: Interconnect
- 160: Large space/aperture
- 180a,b: Gaskets
- 188: Oxidant ports/ manifold
- 200: ports/ manifold

### Figs 2 -17

- 110: Electrochemically active layer
- 111: Cathode layer
- 112: Electrolyte layer
- 113: Anode layer
- 120: Metal substrate
- 123: Extended electrolyte coating
- 124: Porous region
- 125: First side of metal substrate
- 126: Second side of metal substrate
- 130: Spacer
- 131: Support structure
- 140: First fluid volume
- 141: First fluid volume
- 180: Gaskets
- 200: Pair of cell units
- 300: Pair of cell units
- 310: Conductive support structure/current collector
- 311: Tangs of interconnect
- 400: Bank of cell units
- 430: Second fluid volume
- 440: Conductive support structure
- 500: Stack of cell units
- 510: Insulating layer
- 530: Conductive support structure
- 610: Busbar electrically contacting anodes
- 615: Busbar electrically contacting cathodes
- 620: Busbar electrically contacting anodes and cathodes
- 630: Conductive support structure
- 700: Stack of cell units
- 710: Bank of cell units
- 711: Busbar electrically contacting anodes and cathodes
- 715: Busbar electrically contacting anodes
- 720: Busbar electrically contacting anodes and cathodes
- 730: Conductive gasket
- 731: Conductive gasket
- 750: Stack of cell units
- 805: Pair of cell units
- 810: Formed cell unit
- 840: Protrusion
- 850: Flange
- 870: Bank of cell units
- 905: Pair of cell units
- 910: Raised port feature
- 980: Fluid port
- 1020: Cell unit
- 1021: Non-porous metal sheet
- 1040: Protrusion inside chimney
- 1050: Raised port feature
- 1070: Insulating layer
- 1071: Insulating layer/insulating gasket
- 1080: Insulating gasket
- 1200: Chimney
- 1210: Weld path
- 1600: Pair of cell units
- 1620: Fold zone
- 1630: End of pair cell units
- 1640: Bank of cell units
- 1650: Pair of cell units
- 1700: Cell units
- 1720: Fold zone
- 1750: Cell units

## Claims

1. A metal-supported, planar cell arrangement comprising:
at least one pair of cells,
each cell comprising a metal substrate having first and second sides and a porous region providing fluid communication between the sides, planar cell chemistry layers comprising fuel electrode, electrolyte, and air electrode layers being coated or deposited over, and supported by, the porous region on the first side;
wherein:
the metal substrates are in a stacked arrangement with their cell chemistry layers overlying each other such that either both their first sides, or, both their second sides face inwardly in a spaced, opposed relationship, the inwardly facing sides thereby defining a common first fluid volume between them for one of fuel or oxidant, and
at least one of the metal substrates comprises flanged perimeter features, and the metal substrates are sealed together around the flanged perimeter features to form the common first fluid volume therebetween.

2. A cell arrangement in accordance with claim 1, wherein the pair of metal substrates comprise two separate metal plates that are connected together either directly or indirectly to form the stacked arrangement.

3. A cell arrangement in accordance with claim 2, wherein the two metal plates are connected together indirectly to form the stacked arrangement, optionally with a metal spacer plate disposed between them; or
wherein the two metal plates are connected together directly so that they abut one another to form the stacked arrangement, one or both of the metal plates having shaped features that create the first fluid volume between the plates.

4. A cell arrangement in accordance with claim 1, wherein the metal substrates are formed as a single continuous metal substrate having a first side upon which the pair of cell chemistry layers are respectively coated or deposited over the porous regions, the continuous metal substrate being folded between the cell chemistry layers so that they overlie each other to form a folded pair of cells defining the first fluid volume for the one of fuel or oxidant.

5. A cell arrangement in accordance with any preceding claim, wherein the metal substrates are sealed together by directly adjoining the metal substrates at the flanged perimeter features by welding around the flanged perimeter features.

6. A cell arrangement in accordance with any preceding claim, wherein at least one fluid port is provided as an opening through each of the metal substrates, the respective fluid ports being aligned with each other in the direction of stacking and in communication with the common first fluid volume.

7. A cell arrangement in accordance with claim 6, wherein at least one of the metal substrates is provided with shaped port features formed around its port that extend inwardly within the common first fluid volume, elements of the shaped port features being laterally spaced from one another to define fluid pathways between the elements from the port to enable passage of fluid from the port to the common first fluid volume.

8. A cell arrangement in accordance with claim 6 or 7, wherein at least one of the metal substrates is provided with shaped port features formed around its port that extend outwardly away from the common first fluid volume.

9. A cell arrangement in accordance with any preceding claim, wherein the inwardly facing sides define a first fluid volume for fuel and are the second sides of the metal substrates.

10. A method of assembly of a metal-supported, planar cell arrangement, comprising:
providing first and second cells, each cell comprising a metal substrate having first and second sides and a porous region providing fluid communication between the sides, planar cell chemistry layers comprising fuel electrode, electrolyte, and air electrode layers being coated or deposited over, and supported by, the porous region on the first side, wherein at least one of the metal substrates comprises flanged perimeter features; and,
inverting one of the cells with respect to the other so that the metal substrates are in a stacked arrangement with their cell chemistry layers overlying each other such that either both their first sides, or, both their second sides face inwardly in a spaced, opposed relationship so as to define a common first fluid volume therebetween for one of fuel or oxidant, and sealing the metal substrates together around the flanged perimeter features to form the common first fluid volume therebetween, so as to form the cell arrangement.

11. A method in accordance with claim 10, further comprising providing at least one further cell arrangement in the same manner as the first cell arrangement, and stacking the respective cell arrangements to form a bank of cells, and electrically connecting all the fuel electrodes within a bank or all the air electrodes within a bank.

12. A method in accordance with any one of claims 10 and 11, wherein the metal substrates are formed as a single continuous metal substrate, and the inverting comprises folding the continuous metal substrate between the cell chemistry layers so that they overlie each other to form a folded pair of cells defining the first fluid volume for the one of fuel or oxidant.

13. A method in accordance with claim 12, wherein the cell chemistry layers of the pair of cells are respectively coated or deposited over the first side before the continuous metal substrate is inverted by folding to form the folded pair.

14. A method in accordance with any one of claims 10 to 13, further comprising cutting openings through each of the metal substrates to form at least one inlet port and at least one outlet port.

15. A method in accordance with claim 14, further comprising pressing at least one of the metal substrates around its port to form shaped port features that extend inwardly within the common first fluid volume and/or that extend outwardly away from the common first fluid volume.

## Patentansprüche

1. Metallgeträgerte, planare Zellanordnung, die Folgendes umfasst:
mindestens ein Paar von Zellen,
wobei jede Zelle ein Metallsubstrat umfasst, das eine erste und zweite Seite und einen porösen Bereich, der Flüssigkeitsverbindung zwischen den Seiten bereitstellt, aufweist, wobei planare Zellchemieschichten Brennstoffelektroden-, Elektrolyt- und Luftelektrodenschichten umfassen, die auf dem porösen Bereich auf der ersten Seite beschichtet oder aufgebracht sind und davon geträgert werden;
wobei:
die Metallsubstrate in einer gestapelten Anordnung mit ihren Zellchemieschichten, die übereinander liegen, vorliegen, sodass entweder beide ihrer ersten Seiten oder beide ihrer zweiten Seiten nach innen in einer beabstandeten, gegenüberliegenden Beziehung zugewandt sind, wobei die nach innen zugewandten Seiten dadurch ein gemeinsames erstes Flüssigkeitsvolumen zwischen diesen für eines von Brennstoff oder Oxidationsmittel definieren, und
mindestens eines der Metallsubstrate geflanschte Umfangsmerkmale umfasst und die Metallsubstrate um die geflanschten Umfangsmerkmale miteinander verdichtet sind, um das gemeinsame erste Flüssigkeitsvolumen dazwischen zu bilden.

2. Zellanordnung nach Anspruch 1, wobei das Paar von Metallsubstraten zwei separate Metallplatten umfasst, die entweder direkt oder indirekt miteinander verbunden sind, um die gestapelte Anordnung zu bilden.

3. Zellanordnung nach Anspruch 2, wobei die zwei Metallplatten indirekt miteinander verbunden sind, um die gestapelte Anordnung zu bilden, wobei optional eine Metallabstandsplatte zwischen ihnen angeordnet ist; oder
wobei die zwei Metallplatten direkt miteinander verbunden sind, sodass sie aneinander anliegen, um die gestapelte Anordnung zu bilden, wobei eine oder beide der Metallplatten geformte Merkmale aufweisen, die das erste Flüssigkeitsvolumen zwischen den Platten gestalten.

4. Zellanordnung nach Anspruch 1, wobei die Metallsubstrate als ein einziges fortlaufendes Metallsubstrat ausgebildet sind, das eine erste Seite aufweist, auf der das Paar von Zellchemieschichten jeweils auf die porösen Bereiche beschichtet oder aufgebracht sind, wobei das fortlaufende Metallsubstrat zwischen den Zellchemieschichten gefaltet ist, sodass sie übereinander liegen, um ein gefaltetes Paar von Zellen zu bilden, das das erste Flüssigkeitsvolumen für das eine von Brennstoff oder Oxidationsmittel definiert.

5. Zellanordnung nach einem vorstehenden Anspruch, wobei die Metallsubstrate durch direktes Angrenzen der Metallsubstrate an den geflanschten Umfangsmerkmalen durch Schweißen um die geflanschten Umfangsmerkmale miteinander verdichtet sind.

6. Zellanordnung nach einem vorstehenden Anspruch, wobei mindestens ein Flüssigkeitsanschluss als eine Öffnung durch jedes der Metallsubstrate bereitgestellt ist, wobei die jeweiligen Flüssigkeitsanschlüsse miteinander in der Richtung der Stapelung und in Verbindung mit dem gemeinsamen ersten Flüssigkeitsvolumen ausgerichtet sind.

7. Zellanordnung nach Anspruch 6, wobei mindestens eines der Metallsubstrate mit geformten Anschlussmerkmalen bereitgestellt ist, die um dessen Anschluss ausgebildet sind, die sich nach innen innerhalb des gemeinsamen ersten Flüssigkeitsvolumens erstrecken, wobei Elemente der geformten Anschlussmerkmale lateral voneinander beabstandet sind, um Flüssigkeitswege zwischen den Elementen von dem Anschluss zu definieren, um einen Durchgang von Flüssigkeit von dem Anschluss zu dem gemeinsamen ersten Flüssigkeitsvolumen zu ermöglichen.

8. Zellanordnung nach Anspruch 6 oder 7, wobei mindestens eines der Metallsubstrate mit geformten Anschlussmerkmalen bereitgestellt ist, die um dessen Anschluss ausgebildet sind, die sich nach außen weg von dem gemeinsamen ersten Flüssigkeitsvolumen erstrecken.

9. Zellanordnung nach einem vorstehenden Anspruch, wobei die nach innen zugewandten Seiten ein erstes Flüssigkeitsvolumen für Brennstoff definieren und die zweiten Seiten der Metallsubstrate sind.

10. Verfahren zum Zusammenbau einer metallgeträgerten, planaren Zellanordnung, das Folgendes umfasst:
Bereitstellen von ersten und zweiten Zellen, wobei jede Zelle ein Metallsubstrat umfasst, das eine erste und zweite Seite und einen porösen Bereich, der Flüssigkeitsverbindung zwischen den Seiten bereitstellt, aufweist, wobei planare Zellchemieschichten Brennstoffelektroden-, Elektrolyt- und Luftelektrodenschichten umfassen, die auf dem porösen Bereich auf der ersten Seite beschichtet oder aufgebracht sind und davon geträgert werden,
wobei mindestens eines der Metallsubstrate geflanschte Umfangsmerkmale umfasst; und
Umkehren von einer der Zellen in Bezug auf die andere, sodass die Metallsubstrate in einer gestapelten Anordnung mit ihren Zellchemieschichten, die übereinander liegen, vorliegen, sodass entweder beide ihrer ersten Seiten oder beide ihrer zweiten Seiten nach innen in einer beabstandeten, gegenüberliegenden Beziehungn zugewandt sind, um ein gemeinsames erstes Flüssigkeitsvolumen dazwischen für eines von Brennstoff oder Oxidationsmittel zu definieren, und miteinander Verdichten der Metallsubstrate um die geflanschten Umfangsmerkmale, um das gemeinsame erste Flüssigkeitsvolumen dazwischen zu bilden, um die Zellanordnung zu bilden.

11. Verfahren nach Anspruch 10, das weiter Folgendes umfasst: Bereitstellen von mindestens einer weiteren Zellanordnung auf die gleiche Weise wie die erste Zellanordnung und Stapeln der jeweiligen Zellanordnungen, um eine Zellbank zu bilden, und elektrisches Verbinden aller Brennstoffelektroden innerhalb einer Bank oder aller Luftelektroden innerhalb einer Bank.

12. Verfahren nach einem der Ansprüche 10 und 11, wobei die Metallsubstrate als ein einziges fortlaufendes Metallsubstrat ausgebildet sind und das Umkehren das Falten des fortlaufenden Metallsubstrats zwischen den Zellchemieschichten umfasst, sodass sie übereinander liegen, um ein gefaltetes Paar von Zellen zu bilden, das das erste Flüssigkeitsvolumen für das eine von Brennstoff oder Oxidationsmittel definiert.

13. Verfahren nach Anspruch 12, wobei die Zellchemieschichten des Paars von Zellen jeweils auf die erste Seite beschichtet oder aufgebracht werden, bevor das fortlaufende Metallsubstrate durch Falten umgekehrt wird, um das gefaltete Paar zu bilden.

14. Verfahren nach einem der Ansprüche 10 bis 13, das weiter das Schneiden von Öffnungen durch jedes der Metallsubstrate umfasst, um mindestens einen Einlassanschluss und mindestens einen Auslassanschluss zu bilden.

15. Verfahren nach Anspruch 14, das weiter das Pressen von mindestens einem der Metallsubstrate um dessen Anschluss umfasst, um geformte Anschlussmerkmale zu bilden, die sich nach innen innerhalb des gemeinsamen ersten Flüssigkeitsvolumens erstrecken und/oder die sich nach außen weg von dem gemeinsamen ersten Flüssigkeitsvolumen erstrecken.

## Revendications

1. Agencement de cellules planes à support métallique comprenant :
au moins une paire de cellules,
chaque cellule comprenant un substrat métallique présentant des première et seconde faces et une région poreuse assurant une communication fluidique entre les faces, des couches de chimie cellulaire planes comprenant des couches d'électrode de combustible, d'électrolyte et d'électrode à air revêtues ou déposées sur la région poreuse de la première face et soutenues par celle-ci ;
dans lequel :
les substrats métalliques sont disposés selon un agencement empilé avec leurs couches de chimie cellulaire se superposant les unes les autres de telle sorte que soit leurs deux premières faces, soit leurs deux secondes faces soient tournées vers l'intérieur dans une relation espacée et opposée, les faces orientées vers l'intérieur définissant ainsi un premier volume de fluide commun entre elles pour un combustible ou un oxydant, et
au moins un des substrats métalliques comprend des caractéristiques périphériques à brides, et les substrats métalliques sont scellés ensemble autour des caractéristiques périphériques à brides pour former le premier volume de fluide commun entre ceux-ci.

2. Agencement de cellules selon la revendication 1, dans lequel la paire de substrats métalliques comprend deux plaques métalliques séparées qui sont reliées entre elles directement ou indirectement pour former l'agencement empilé.

3. Agencement de cellules selon la revendication 2, dans lequel les deux plaques métalliques sont reliées indirectement pour former l'agencement empilé, éventuellement avec une plaque d'espacement métallique disposée entre elles ; ou
dans lequel les deux plaques métalliques sont reliées directement l'une à l'autre de telle sorte qu'elles soient contiguës l'une à l'autre pour former l'agencement empilé, une des plaques métalliques ou les deux ayant des caractéristiques profilées qui créent le premier volume de fluide entre les plaques.

4. Agencement de cellules selon la revendication 1, dans lequel les substrats métalliques sont formés comme un seul substrat métallique continu présentant une première face sur laquelle la paire de couches de chimie cellulaire est respectivement revêtue ou déposée sur les régions poreuses, le substrat métallique continu étant plié entre les couches de chimie cellulaire de telle sorte qu'elles se superposent pour former une paire de cellules pliées définissant le premier volume de fluide pour le combustible ou l'oxydant.

5. Agencement de cellules selon l'une quelconque des revendications précédentes, dans lequel les substrats métalliques sont scellés ensemble enjoignant directement les substrats métalliques aux caractéristiques périphériques à brides par soudage autour des caractéristiques périphériques à brides.

6. Agencement de cellules selon l'une quelconque des revendications précédentes, dans lequel au moins un orifice de fluide est fourni comme ouverture à travers chacun des substrats métalliques, les orifices de fluide respectifs étant alignés les uns avec les autres dans le sens de l'empilement et en communication avec le premier volume de fluide commun.

7. Agencement de cellules selon la revendication 6, dans lequel au moins un des substrats métalliques est pourvu de caractéristiques d'orifice profilées formées autour de son orifice qui s'étendent vers l'intérieur dans le premier volume de fluide commun, les éléments des caractéristiques d'orifice profilés étant espacés latéralement les uns des autres pour définir des voies de fluide entre les éléments depuis l'orifice pour permettre le passage de fluide depuis l'orifice jusqu'au premier volume de fluide commun.

8. Agencement de cellules selon la revendication 6 ou 7, dans lequel au moins un des substrats métalliques est pourvu de caractéristiques d'orifice profilées formées autour de son orifice qui s'étendent vers l'extérieur à partir du premier volume de fluide commun.

9. Agencement de cellules selon l'une quelconque des revendications précédentes, dans lequel les faces orientées vers l'intérieur définissent un premier volume de fluide pour un carburant et sont les secondes faces des substrats métalliques.

10. Procédé d'assemblage d'un agencement de cellules planes à support métallique, comprenant :
la fourniture de première et seconde cellules, chaque cellule comprenant un substrat métallique présentant des première et seconde faces et une région poreuse assurant une communication fluidique entre les faces, des couches de chimie cellulaire planes comprenant des couches d'électrode de combustible, d'électrolyte et d'électrode à air étant revêtues ou déposées et soutenues par, la région poreuse de la première face, dans lequel au moins un des substrats métalliques comprend des caractéristiques périphériques à brides ; et
l'inversion d'une des cellules par rapport à l'autre de sorte que les substrats métalliques soient empilés avec leurs couches de chimie cellulaire se superposant les unes les autres de telle sorte que soit leurs deux premières faces, soit leurs deux secondes faces soient tournées vers l'intérieur dans une relation espacée et opposée de manière à définir un premier volume de fluide commun entre elles pour un combustible ou un oxydant, et le scellement des substrats métalliques ensemble autour des caractéristiques périphériques à brides pour former le premier volume de fluide commun entre eux, de manière à former l'agencement de cellules.

11. Procédé selon la revendication 10, comprenant en outre la fourniture d'au moins un autre agencement de cellules de la même manière que le premier agencement de cellules, et l'empilement des agencements de cellules respectifs pour former un bloc de cellules, et la connexion électrique de toutes les électrodes de combustible dans un bloc ou de toutes les électrodes à air dans un bloc.

12. Procédé selon l'une quelconque des revendications 10 et 11, dans lequel les substrats métalliques sont formés comme un seul substrat métallique continu, et l'inversion comprend le pliage du substrat métallique continu entre les couches de chimie cellulaire de manière à ce qu'elles se superposent les unes les autres pour former une paire de cellules pliées définissant le premier volume de fluide pour le combustible ou l'oxydant.

13. Procédé selon la revendication 12, dans lequel les couches de chimie cellulaire de la paire de cellules sont respectivement revêtues ou déposées sur le premier côté avant que le substrat métallique continu ne soit inversé par pliage pour former la paire pliée.

14. Procédé selon l'une quelconque des revendications 10 à 13, comprenant en outre des ouvertures de coupe à travers chacun des substrats métalliques pour former au moins un orifice d'entrée et au moins un orifice de sortie.

15. Procédé selon la revendication 14, comprenant en outre le pressage d'au moins un des substrats métalliques autour de son orifice pour former des caractéristiques d'orifice profilées qui s'étendent vers l'intérieur jusque dans le premier volume de fluide commun et/ou qui s'étendent vers l'extérieur à partir du premier volume de fluide commun.
